# EUROPEAN PATENT APPLICATION

(11) **EP 1 653 660 A1**
(43) Date of publication of application: **03.05.2006**
(21) Application number: 04771307.8
(22) Date of filing: 30.07.2004
(51) Int. Cl.: H04L 12/22, H04L 12/66, H04L 29/06, H04L 9/32

(54) **COMMUNICATION SYSTEM, COMMUNICATION DEVICE, COMMUNICATION METHOD, AND COMMUNICATION PROGRAM FOR REALIZING THE SAME**

(30) Priority: 08.08.2003 JP 2003290822
(71) Applicant: Total Telecommunication Technology Co. Ltd., Osaka-shi, Osaka 530-0044 (JP)
(72) Inventor: OZAKI, Hirotsugu T.T.T. Kabushikikaisha, Kita-ku, Osaka-shi, Osaka 530-0044 (JP); OGAWA, Keiko T.T.T. Kabushikikaisha, Kita-ku, Osaka-shi, Osaka 530-0044 (JP)
(74) Representative: Smith, Samuel Leonard
(86) International application number: PCT/JP2004/011304
(87) International publication number: WO 2005/015827

(57) **Abstract**

In order to strengthen preventing functions of data leakage, falsifying, camouflage, approach and attack without changing a program of a higher rank application, encryption and decryption logic arrangement is carried out on the transmission side and on the reception side and this is offered to a new encryption system TCP2 applied to a payload of a protocol which corresponds to TCP or UDP existing in a transport layer. By employing this TCP2, a cryptograph process communication can be realized by dissolving various kinds of restrictions which a conventional IPsec or SSL possesses without receiving a restriction of a higher rank application and at the same time, by obtaining compatibility in an IP layer.

## Description

### TECHNICAL FIELD

The present invention relates to a security system in communication; more particularly to a communication system for preventing "leakage" and "falsifying" and further "camouflage", "approach" or "attack" of data on an internet; and furthermore particularly to protocol stacks for realizing a communication system, communication apparatus, communication method and a computer program for realizing thereof.

### BACKGROUND ART

In recent years, communication utilizing internet has been spreading and expanding rapidly in society, because anybody who has at least a Windows personal computer can access a computer on a network only by connecting it to the network. On the other hand, the social problem has become large being accompanied by the spread and expansion of the internet communication where a hacker or a cracker invades a computer system of other people so as to sneak a look at software and data and to carry out falsifying or breakdown thereof.

Speaking of a concrete case of injustice disturbance, first of all, there is a system disturbance by sending a large amount of messages through the network for disturbing the operation of the computer system such that the central system will come not to be used. When the host becomes overloaded owing to this disturbance, it also might happen that it falls into a system down.

Also, there is an injustice disturbance of "injustice access and camouflage" by acquiring a password in the host for stealing confidential information, carrying out falsifying and breakdown of information and the like. There is an ugly case in this disturbance such that information possessed by the computer is rewritten arbitrarily so as to backstab a person. Further, also an injustice activity so-called a spy-ware occurred where a specific personal computer is sneaked into and personal confidential data such as mail addresses and passwords are exploited. As mentioned above, also a possibility cannot be denied where a so-called wiretapping action to sneak a look at database contents possessed by the computer connected to the network unjustly may take place from one moment to the next.

Also, it is in a situation where it cannot be said that there is never a crisis such as an action for stealing personal information intentionally in the site or in the managing source of the server and a cyber terro. (cyber terrorism) by a spy lurking within a company or the like.

Further, injustice disturbance such as feeding "virus" which is a program bringing about a computer obstacle in the computers of other people is increasing recently. The personal computers used at home for mails or the like are infected with this fed virus and at the moment when it is connected within a company, the whole personal computers within the company are infected therewith and/or the virus will breakdown files in the computer and furthermore, a problem such as making the whole network into a down condition also occurs.

Consequently, in a communication on an internet utilizing a conventional TCP/IP (Transmission Control Protocol/Internet Protocol) or UDP (User Datagram Protocol), encryption communication called IPsec (IPsec: Security Architecture for Internet Protocol) or SSL (Secure Socket Layer) is utilized as a function for preventing "leakage", "falsifying" or the like of data. In general, there are common key (also called secret key) cryptograph system and public key cryptograph system in the encryption communication in which common key cryptograph system is used for the IPsec in many cases. The common key cryptograph system has a feature in that the speed of encryption and decryption is more rapid as compares with the public key cryptograph system. The common key cryptograph system used in the IPsec is a system which carries out encryption and decryption by the same key and it is allowed to make the key creation on either side of the transmission side or the reception side, but close attention should be paid for the contents not to be leaked outside when the key is exchanged, because the common key is used on the reception side and the transmission side.

The algorithm used in the common key cryptograph system is represented by DES (Data Encryption Standard: common key (secret key) encryption algorithm developed by US IBM company). IPsec also employs this DES for one of encryption algorithms. IPsec was promoted by IETF (Internet Engineer Task Force) for standardization and the feature thereof lies not only in encrypting specific application merely but also in encrypting every communication transmitted from the host by an IP level. In this manner, it becomes possible for a user to have a secure communication without being conscious of the application. Also, IPsec makes it possible to change the encryption algorithm to be used without changing its own structure such that it can be used over the future.

A 32 bit code referred to as SPI (Security Pointer Index) is used for the common encryption key which is used in the IPsec and IKE (Internet Key Exchange) is used for the key exchange protocol. Further, the IPsec is provided with a protocol AH (Authentication Header) for a completeness authentication.

Also, SSL is an HTTP protocol with a security function which was developed by US Netscape Company (merged by AOL now), it becomes possible for a client and a server by utilizing this to authenticate each other on the network, and it becomes possible to interact with highly confidential information such as credit card information or the like by encrypting it. In this manner, it is possible to prevent wiretapping of data, resending attack (attack of sending data to be flown on the network many times repeatedly by wiretapping), camouflage (communication by masquerading another person himself), falsifying of data and the like.

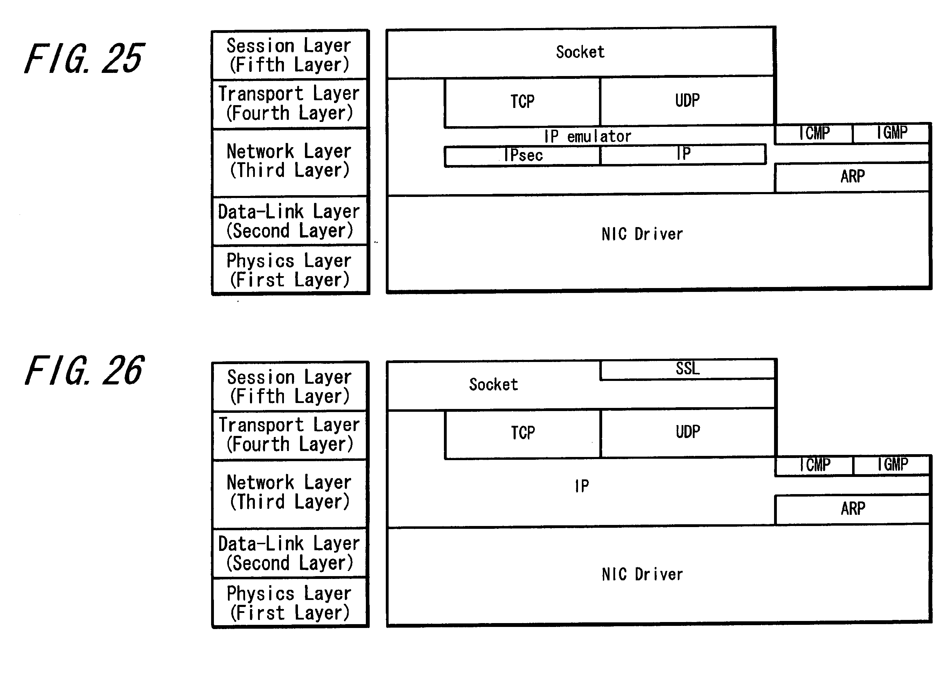

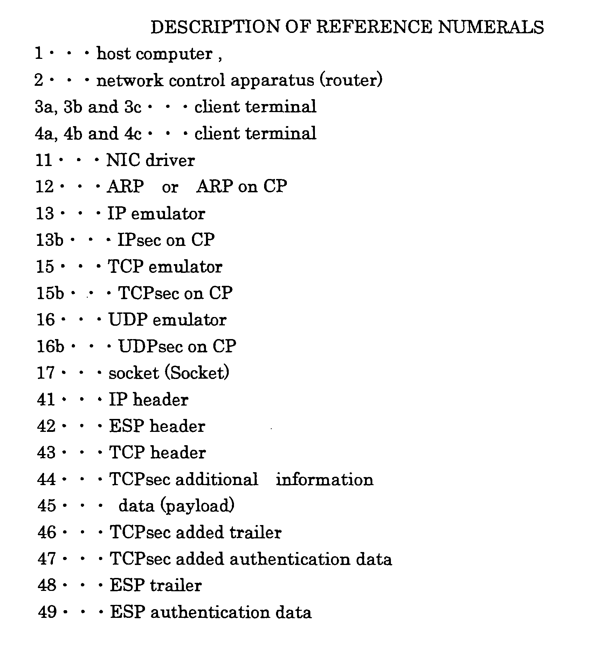

FIG. 25 shows an example of protocol stacks in case of carrying out an encryption communication by using conventional IPsec and FIG. 26 shows an example of protocol stacks in case of carrying out an encryption communication by using conventional SSL.

OSI reference model is constituted such that a bottom layer (first layer) is a physics layer, a second layer is a data-link layer, a third layer is a network layer, a fourth layer is a transport layer, a fifth layer is a session layer, a sixth layer is a presentation layer and a top layer (seventh layer) is an application layer. The seven hierarchies in this OSI reference model is illustrated by dividing a communication function into seven stages and a standard function module is to be set for every hierarchy. In FIG. 25, there is shown until the session layer of the fifth layer.

The protocol stacks mean a software group cumulated in hierarchy form by selecting a protocol for realizing functions in respective hierarchies of the network.

First, to explain the outline with respect to the OSI reference model, the physics layer of the first layer is a layer which defines a physical electrical characteristic of the signal line, a modulation method of codes and the like. However, it is rare case that only this layer is defined and mounted alone and ordinarily is define, for example, as an Ethernet standard or the like together with the data-link layer of the second layer.

The data-link layer of the second layer is a layer which defines packet making of data, physical node addresses, a transmitting and receiving method of packets and the like. This layer is one which defines a protocol for interacting packets between two nodes through a physical communication medium where some kind or another address is put on with respect to each node and packets are transmitted on the communication medium by specifying a transmission source of the packets based on that address. As communication mediums, there are diversified types of copper wiring, wireless, optical fiber and the like. Also, with respect to the connection mode (topology), there is not only one-to-one facing connection but also a lot of kinds of bus formed one, star formed one, ling formed one and the like. The packet transmitted on the communication medium is taken in a node at the time point when it reaches that node on the reception side and is further sent to an upper protocol layer.

A NIC (Network Interface Card) driver which is disposed over the physics layer and the data-link layer is an add-in board for connecting a personal computer, a printer or the like to a premises network (LAN). In case of saying merely a network card, it is to be connected to Ethernet in many cases.

By means of this NIC driver, a node (apparatus) which wants to transmit data observes a situation of vacancy of a cable and is made to start a transmission when the cable becomes vacant. At that time, if a plurality of nodes start transmissions simultaneously, data collide in the cable and are broken-down, so that both of them stop transmissions and will restart transmissions after waiting a random of time. In this manner, it is possible for a plurality of nodes to share a single cable so as to communicate mutually.

The network layer of the third layer is a layer which defines a communication method between two arbitrary nodes. Speaking of TCP/IP, it corresponds to an IP layer. It is possible in the data-link layer to carry out a communication between nodes on the same network medium and the role of this network layer is to communicate by using that function while routing is carried out between two arbitrary nodes existing on the network. Here, routing means transmitting by selecting an optimum path when packets are transmitted to an aimed host in the TCP/IP network. for example, it is possible only for node comrades on the same segment to communicate each other in the Ethernet, but a communication is carried out in the network layer between two Ethernet segments by routing packets. Also, it is possible to route packets not through physical network media but by routing to a dial-up PPP (Point to Point Protocol) line which connects a computer to a network (Ethernet) through a telephone line, also by routing to an exclusive line using an optical fiber and the like. For this purpose, addresses (IP addresses in case of TCP/IP) which are not dependent on the physical medium are ordinarily allotted to respective nodes and the routing is carried out based thereupon. IPsec encrypts every communication in this network layer, in other words, every communication transmitted from the host with an IP level, so that it becomes possible for a user to carry out a secure communication without being conscious of the application.

The transport layer of the fourth layer is a protocol layer for realizing a hypothetical communication path in which there is no error between two processes executed on respective nodes. Speaking of TCP/IP, it corresponds to a TCP layer. The network layer offers a function to carry out a communication between two nodes and the role of this layer is to offer a hypothetical communication path by using this in which there is no error between two processes (applications). More specifically, it is possible to transmit data in the network layer, but there is no guarantee that the data will certainly arrive at a partner. Also, there is no guarantee either that the data will arrive correctly in the transmitted order. Consequently, it is this layer to offer a communication path in which there is no error in order to make it easy to be used for the application. If it is necessary, data resending and recovering processes or the like is carried out.

UDP is also disposed in this transport layer other than TCP and the difference between UDP and TCP lies in that UDP is made to be high speed caused by non-compensation for data while TCP is low speed caused by the protocol compensated for data. TCP is used in a case when data are mainly transmitted such as a case of a communication between computers and UDP is used a lot in a case when sounds and videos are transmitted such as a case of an IP telephone. No example has existed until now in which an encryption process was applied to the transport layer of this third layer.

The session layer of the fifth layer is a layer for defining a procedure of a session (from start to end of a communication) and it is a layer for making a condition to communicate by establishing a connection between applications. A socket disposed in this layer means a network address combined by an IP address corresponding to an address in the network which the computer possesses and a port number which is a sub address of the IP address. In case of connecting computer comrades, it is carried out by always appointing a socket (pair of IP address and port number). As shown in FIG. 26, according to SSL which is a conventional representative encryption communication technology, an encryption communication is realized in this session layer.

The presentation layer of the sixth layer is a layer for defining expression method, coding, encrypting or the like of the data which are interacted in the session (start to end of a communication). In the TCP/IP protocol, there is no portion corresponding to this layer and the stream data process is ordinarily handled by the application itself.

Also, the application layer of the seventh layer is a layer for defining data interaction between applications and there is no portion corresponding to this layer in the TCP/IP protocol. It is a layer for defining, for example, an electronic mail format, an internal structure of a document text or the like which is a common data structure or the like necessary in case of interacting data between applications bilaterally.

FIG. 25 shows standard protocol stacks equipped with IPsec in which first, an NIC (Network Interface Card) driver is provided in the physics layer (first layer) and the data-link layer (second layer). This driver is an interface card driver for connecting hardware of a computer or the like to a network, and its content is software of data transmission and reception control. for example, a LAN board or a LAN card for connecting to Ethernet corresponds thereto. In the network layer of the third layer, there exists an IP emulator a portion of which is elongated until the transport layer (fourth layer). The portion extended until the transport layer is not mounted with a function as a transport. A function of the network layer is only provided for the session layer. This IP emulator performs an operation for using a protocol for carrying out an encryption communication by IPsec and IP which is a protocol not carrying out an encryption communication after switching them in response to its application. Also, ARP (Address Resolution Protocol) is disposed in the network layer of the third layer. The ARP is a protocol to be used for finding MAC (Media Access Control) address which is a physical address of Ethernet from an IP address. MAC is a transmission control technology referred to as a medium access control which is utilized in LAN or the like and is utilized as a technology for defining a transmitting and receiving method of a frame which is a transmitting and receiving unit of data, a frame format, error correction and the like.

Also, this network layer is provided with an ICMP (Internet Control Message Protocol) which is a protocol for transferring an error message and a control message of IP and with IGMP (Internet Group Management Protocol) for controlling a host group for distributing the same data to a plurality of hosts efficiently or being constituted for receiving the distribution. Then, TCP and UDP are disposed in the transport layer which is an upper layer of the network layer and then, a socket interface is disposed in the session layer which is an upper layer thereof.

FIG. 26 shows an example of a standard protocol equipped with an SSL for an encryption processing protocol the network layer is not equipped with IPsec, but the socket (session layer) is equipped with an SSL instead. Other protocols are same as those shown in FIG. 25.

In conventional representative encryption communication technologies, IPsec is one for transmitting and receiving by encrypting packets of IP and consequently, there is no need for application software which utilizes upper protocols of TCP, UDP or the like to be aware of a fact that IPsec is used.

On the other hand, in the SSL, a digital certificate which uses RSA (Rivest, Shamir, Adleman: initial letters of three persons who developed a public key cryptograph system) public key cryptograph technology is used for the authentication level each other and a common key cryptograph technology such as DES or the like is used for the data encryption. This SSL lies in the session layer of the fifth layer, so that it is to be dependent on a specific application.

The IPsec was realized as a function for preventing "leakage" and/or "falsifying" of data in the third layer (network layer) which is lower than the fourth layer (transport layer) with reference to OSI (see, for example, R. Atkinson, August 1995, "Security Architecture for the Internet Protocol", RFC1825.). On the other hand, the SSL is an encryption technology in the session layer of the fifth layer and is one for transmitting and receiving information relating to privacy, company secret information or the like securely by encrypting data of WWW (World Wide Web) which is used widely now for internet, FTP (File Transfer Protocol) or the like.

Table 1 is a table describing functions of IPsec and SSL by comparison thereof. So long as seen from this table, it seems that IPsec and SSL have mutually opposite advantages and defects.

For example, in case of SSL for the communication between client-client, its command system and communication content will become a relation between master and servant, in other words, client/server, so that the communication between client-client could not be carried out without through a server. More specifically, in a case when secret data are transmitted from a terminal A to a terminal B by encrypting using SSL, it was always necessary to interpose a server there-between. On the other hand, there is not such a restriction in IPsec, so that it becomes possible to perform a directly communication.

**Table 1: Comparison of IPsec and SSL Functions**

| | IPsec | | SSL | |
|---|---|---|---|---|
| (1) communication between client□client | ○ | Direct communication is available. | × | Direct communication is unavailable. Communication is available through a special server. |
| (2) PPP Mobile Environment | □ | It is possible by utilizing XAUTH. However, there is a problem of security. | ○ | Communication is available. |
| (3) ADSL Environment | | | | |
| (4) NAT, IP Masquerade Environment | □ | It can be realized by being commonly used with NAT-T. | ○ | Communication is available. |
| (5) DoS Attack to TCP/IP Protocol Stack | ○ | It is possible to have correspondence with DoS attack. | × | Correspondence is unavailable. |
| (6) Under Bad Communication Environment (Environment where Communication Errors often Occur Caused by Many Physical Noises) | × | Correspondence is inadequate. Lowering of throughput is incurred. | ○ | Correspondence is available. |
| (7) Communication between Different LANs | □ | Communication is unavailable when the subnet address is the same address. | o | Communication is available. |
| (8) Different Network Environment | □ | Management is hard and difficult. | ○ | Management can be simplified. |
| (9) Connection through a plurality of Carriers | × | Communication is unavailable. | ○ | Communication is available. |
| (10) Secure Communication of All UDP Ports | ○ | Secure communication is possible. | × | Communication is unavailable. |
| (11) Secure Communication of All TCP Ports | ○ | Secure communication is possible. | × | Communication is unavailable except a specific TCP port. |
| (12) Limitation in Application | ○ | Not affected. | × | It is necessary to change the socket program. |
| (13) Access Unit | | IP Unit | | Resource Unit(URL Unit, Folder Unit) |
| (14) MTU(Maximum Segment Size) | □ | Adjustment is necessary. | ○ | Communication is Available without being Conscious of MTU. |
| (15) Internet Telephone Using VoIP under Mobile Environment | □ | It is possible by utilizing XAUTH. However, there is a problem of security. | × | It cannot be used. |
| (16) Internet Telephone Using VoIP under ADSL Environment | □ | It is possible by utilizing XAUTH. However, there is a problem of security. | × | It cannot be used. |
| (17) Internet Telephone Using VoIP between Different LANs | □ | It can be realized by using NAT-T, IPsec-DHCP. | × | It cannot be used. |
| (18) Internet Telephone Using VoIP between LANs of Plural Carriers | × | Communication is unavailable. | × | It cannot be used. |

Also, in a PPP (Point to Point Protocol) mobile environment or an ADSL (Asymmetric Digital Subscriber Line) environment, IPsec carries out authentication of its connecting partner in a communication using an IKE (Internet Key Exchange) protocol which is a protocol to be used for the determination of encryption system, key exchange and bilateral authentication before it starts an encryption communication of data. Consequently, in case of the PPP Mobile Environment (remote client) or the ADSL Environment, the IP address cannot be fixed, so that a main mode of IKE which is used most of all between gateways of IPsec, in other words, a mode using IP address information of a communication partner for authentication cannot be used. It should be noted for the countermeasure that the IP address need not be used for ID information by using an aggressive mode in which, for example, user information is used for the ID information such that it becomes possible to specify a partner by using a password of a user for the well known common key. However, in the aggressive mode, the ID of the connecting partner is transmitted in a message which is the same as key exchange information, so that the ID is to be transmitted as a plaintext itself without being encrypted. Also, the authentication problem can be solved by utilizing XAUTH (Extended Authentication within IKE), but the IP address is unknown in the access by a remote client caused by a firewall setting, so that it becomes necessary to permit all of IKE and IPsec such that problems relating to security remain. Speaking of SSL, it is possible to communicate even under this environment.

Also, there is a problem in IPsec that it cannot have correspondence with NAT (Network Address Translation) and IP masquerade. In order to have correspondence therewith, it has to be commonly used with other function such that, for example, it is to be listed in a payload of UDP. NAT is a technology for a company or the like connected to an internet to share one global IP address in a plurality of computers and a technology for bilaterally-converting IP address (local address) available only in an organization and address (global address) on the internet. The reason why it cannot have correspondence with NAT is because it becomes impossible for the bilaterally conversion of the global address to be performed by this local address since the IP header is in an authentication region of AH (Authentication Header) and it becomes impossible for local address comrades having different sub-nets to communicate each other.

Also, IP masquerade means a structure which makes it possible to access to the internet from a plurality of clients who possess private addresses in LAN and it can be said, seen from a view point of security, that it is desirable to utilize that, because only a terminal which is operated by the IP masquerade can be seen from the outside (internet). The reason why IPsec cannot have correspondence with IP masquerade is because the ESP (Encapsulating Security Payload: encrypted payload) header of IPsec is positioned just after the IP header. An ordinarily router mounted with IP masquerade judges such that a TCP/UDP port number is to be positioned just after the IP header. Consequently, that port number is made to change if it goes by way of a router mounted with IP masquerade, so that IPsec judges that there was a falsifying and there occurs a problem that the authentication of the host cannot be obtained. It is possible to avoid this problem by utilizing a product which supports NAT-T (NAT-Traversal) for taking onto a payload of UDP. However, it is not possible to connect even NAT-T correspondence product-comrades if draft versions of NAT-T are different each other. It is possible for SSL to communicate even under this environment.

On the other hand, SSL is not helpless with respect to various kinds of attacks to TCP/IP by an injustice invader of the network which is called as a hacker or a cracker, so-called a DoS attack (attack stopping service of Denial of Service). When a DoS Attack to the TCP/IP protocol stack, for example, a TCP cutoff attack takes place, the TCP session is cutoff such that the service of SSL is to be stopped. The IP layer possess a security function since the IPsec is mounted in the third layer (IP layer), so that it is possible to prevent a DoS attack to TCP/IP (fourth layer, third layer). However, SSL is an encryption protocol which is mounted in a layer (fifth layer) upper than the TCP/IP (fourth layer, third layer), so that it is impossible to prevent a DoS attack to TCP/IP.

Further, SSL is more effective as compared with IPsec with respect to a communication under an inferior communication environment such as one in which there are many physical noises and a lot of communication errors occur frequently. More specifically, it becomes a situation for IPsec in case of detecting an error that the resending operation is to be dependent on the upper TCP. TCP transmits resending data to IPsec, but IPsec cannot recognize that they are the resending data such that a re-encryption is to be carried out. SSL carries out an error recovering process by TCP, so that there never happens that the same data are re-encrypted.

Also, it is not possible for IPsec to communicate between different LANs. More specifically, distribution management of sub-net addresses in LAN is managed by DHCP (Dynamic Host Configuration Protocol) server existing in the LAN, there never happens in the LAN that the same sub-net addresses are to be allocated, but there is a possibility in case of a communication between different LANs that the same addresses are to be allocated, because the DHCP servers existing in the respective LANs allocate sub-net addresses individually. In a case when the same addresses are allocated in this manner, it is not possible for the IPsec to communicate. However, it is possible to communicate therein if an IPsec□DHCP servers are set up differently so as to be managed such that same addresses never occur. The SLL is positioned in the fifth layer (session layer) of the OSI reference model as mentioned above, so that an error recovering process can be performed in TCP of a lower layer and it becomes possible to communicate under an inferior environment as described above.

Also, with respect to the communication under different network environments, IPsec has to manage all of the nodes for passing through and to make setting change such that the IPsec can pass through, so that the manage becomes hard, but it is possible for SSL to carry out a communication even under this environment without being conscious of the environment of the nodes which are passed through.

Further, there is a problem in IPsec that a connection through a plurality of carriers cannot be attained. In other words, IPsec has to manage all of the nodes for passing through and to make setting change such that IPsec can pass through, so that a connection through a plurality of carriers cannot be attained. for example, in a case when it is made contracts with different carriers in Tokyo and Osaka, it is not possible to connect there-between, so that there is also a case in which expensive exclusive lines are introduced additionally. It becomes possible for SSL to communicate even under this environment.

Also, it is not possible for SSL to communicate UDP by encryption, because it does not support UDP communication. It is not possible for TCP either to communicate all of TCP ports by encryption, because it only supports specific ports. On the other hand, it is possible for IPsec to communicate either one of UDP and TCP by encryption.

Further, SSL has a problem in a matter that it does not have compatibility with respect to the application. The application uses the socket (fifth layer) as a program interface when an internet communication is carried out. Therefore, in a case when the application uses SSL (fifth layer), this socket interface must be changed to SSL interface. Consequently, SSL has no compatibility with the application. On the other hand, IPsec is positioned lower than the socket (fifth layer), so that the socket (fifth layer) can be used as a program interface directly for the application such that it has compatibility with the application.

Also, while IPsec can control according to the IP address unit, SSL is to control according to the source unit (URL unit, folder unit).

Further, IPsec has a problem that the maximum segment size becomes small. More specifically, since IPsec uses an ESP header and an ESP trailer, the payload becomes small, so that fragment (division of packet) occurs and the throughput is lowered. Also, since the fragment is prohibited for the TCP packet, it is necessary in the end-end to comprehend environment in which IPsec passes and to set a maximum segment size by which a fragment does not occur. On the other hand, it is not necessary for SSL to comprehend an environment for passing through, so that it is not necessary to set the maximum segment size.

As mentioned above, it was explained with respect to comparison of IPsec and SSL functions according to table 1, but TCP2 (under application procedure for a registered trademark) which is a protocol of the present invention to be described hereinafter is an epoch-making encryption communication protocol which includes all of the advantages of these IPsec and SSL and further has a lot of merits other than those above.

### DISCLOSURE OF THE INVENTION

The present invention was invented in view of the problems as mentioned above and has an object to offer a communication system and particularly to offer protocol stacks, a related communication apparatus, communication method and a communication program for realizing those above wherein it is not necessary to mount "encryption function" for preventing an injustice invasion to a computer terminal on each of application-programs, consequently, it is not necessary to re-create an application-program itself either, in addition, it is possible to communicate also with a communication partner which has no correspondence with the aforesaid encryption function by means of a conventional plaintext and furthermore, it is possible to receive the benefit of the encryption and the authentication even under an environment in which IPsec cannot be utilized (or situation in which it is not desired to be utilized).

In order to solve the aforesaid problem and to achieve the object of the present invention, the communication system of the present invention is a communication system which handles a protocol corresponding to TCP or UDP positioned in a transport layer and comprises arrangement means for arranging encryption and decryption logic which have correspondence therewith for both ends of a communication path; protocol encryption means for encrypting and transmitting at least a payload of the protocol corresponding to said TCP or UDP in a packet as an information unit to be transmitted and received according to an encryption logic arranged by said arrangement means; and protocol decryption means for decrypting said encrypted protocol to be received according to a decryption logic arranged by said arrangement means, wherein an encryption communication is carried out by applying an encryption and decryption logic to the protocol of the transport layer.

In this manner, an original encryption of TCP or UDP level which did not exist in the prior art becomes possible and the possibility of data leakage and/or falsifying in a layer upper than IP is dramatically decreased. In other words, it becomes in a situation that data after IPsec of encrypting the IP level is released are to be performed with original encryption of a TCP or UDP level, so that the strength of cryptograph increases based on the meaning of its double encryption and at the same time, it becomes an effective defense with respect to data leakage caused by a target of the interface such as wire tapping with respect to data just after IP is decrypted rightly.

Also, it is possible to strengthen security independently by encrypting only TCP or UDP even in a case when IP is not encrypted.

Further, there is a case in which broadcast function of UDP is worked independently separated from IPsec from the viewpoint of performance or the like and also in this case, encryption of the TCP or UDP level according to the present invention is effective.

It should be noted that it is preferable for the arrangement of the encryption and decryption logics to be arranged before the encryption and decryption logics having correspondence at both ends of the communication path. Here, the communication path means one regardless of wired and wireless. It is needless to say that a method for communicating through a satellite is also included. Also, the arrangement of encryption and decryption logics according to the present invention also includes carrying out arrangement of encryption and decryption logics by storing encryption and decryption logics in a floppy disc, a CD (Compact Disc) or a removable medium such as a USB memory or an IC chip and by exchanging that medium on the transmission side and the reception side.

Also, it is possible according to the present invention to perform recognition of injustice communication pattern of "approach", "attack" or the like to an application layer of an upper layer, typically of an HTTP or the like, in a lower layer (transport layer). for example, a combination of protocol encryption means or protocol decryption means used in the communication system of the present invention with a function module such as a conventional cracking-protector (general means for detecting a cracking pattern, for canceling or for restricting passage) is realized in either one of TCP and UDP of a transport layer which is a lower layer than an application layer of an upper layer and an IP, ARP, ICMP, IGMP or the like which corresponds to a network layer and is a layer of further beneath thereof. It is possible to realize these protocol stacks as a single protocol stacks by "software or a hardware module".

In this manner, it is possible other than the effects mentioned above to realize a communication system which has a large effect versus cost Wherein there is no overlap or gap between protocol stacks with respect to a function for preventing "leakage" or "falsifying" of data and furthermore for preventing "camouflage", "approach", or "attack".

Also, according to the communication system of the present invention, first and second communication apparatus equipped with arrangement means for arranging an encryption and decryption logic and a third communication apparatus not equipped with arrangement means of the encryption and decryption logic are comprised, wherein the communication apparatuses (first and second communication apparatuses) equipped with the arrangement means are equipped with encryption and decryption protocol processing means of TCP or UDP and besides also with ordinarily protocol processing means for processing ordinarily TCP or UDP without being accompanied by the encryption and decryption, when a communication is carried out between the communication apparatus comrades having these encryption and decryption logic arrangement means, the communication is carried out by using the encryption and decryption protocol processing means, in a case when a communication is carried out between the communication apparatus (first and second communication apparatuses) equipped with the arrangement means and the third communication apparatus not equipped with the arrangement means of the encryption and decryption logic, it is determined not to carry out the encryption and decryption in this communication by means of the encryption and decryption arrangement means such that it is made possible to carry out a communication by the ordinarily TCP or UDP protocol processing means.

In this manner, it becomes possible to acquire a communication as it always has been in the past even with a communication apparatus which does not have correspondence with the encryption communication according to the present invention.

Further, according to the communication system of the present invention, in a case when a communication is carried out from the communication apparatus (first or second communication apparatus) equipped with the arrangement means for arranging the encryption and decryption logic to the communication apparatus (third communication apparatus) not equipped with the arrangement means for arranging the encryption and decryption logic, the first and second communication apparatuses determine not to carry out a communication with the third communication apparatus by the arrangement means of the encryption and decryption logic, so that it is also possible not to carry out a communication with aforesaid third communication apparatus.

In this manner, it is possible to employ a thorough security policy with respect to a restriction of communication partners and each respective security level.

According also to the present invention, an encryption and decryption logic which can be a candidate for the arrangement by the encryption and decryption logic arrangement means is stored in a memory or a circuit and it is possible to further comprise logic changing means for changing aforesaid storing contents periodically.

In this manner, it is not necessary to re-create or counterchange protocol stacks themselves and it is possible to have correspondence with a new encryption algorithm or to reduce a decryption risk by changing the cryptograph key.

Further, according to the present invention, it is also possible for the encryption and decryption logic arrangement means to arrange with respect to the encryption and decryption logic that a plaintext is to be handled without encryption.

In this manner, it is possible to communicate as it always has been in the past even in a case in which a communication partner, for example, protocol stacks or the like on the client side does not have correspondence with the encryption or the like according to the present invention.

It should be noted even in such a case that it is possible to make good use of a so-called cracking-protector (CP) function for preventing "camouflage", "approach" or "attack".

The present invention also offers a communication system which handles a protocol corresponding to TCP or UDP and comprises completeness authentication arrangement means for arranging a completeness authentication logic which has correspondence therewith for both ends of a communication path; protocol completeness authentication information addition means for outputting or transmitting at least a payload of said protocol corresponding to the TCP or UDP in a packet as an information unit to be transmitted and received by adding completeness authentication information according to a completeness authentication logic arranged by said completeness authentication arrangement means; and protocol completeness authentication means for completeness-authenticating the received protocol added with said completeness authentication information according to a completeness authentication logic arranged by said completeness authentication arrangement means.

Also, according to the present invention, first and second communication apparatuses equipped with completeness authentication arrangement means for carrying out arrangement of completeness authentication by using TCP or UDP of a transport layer and a third communication apparatus not equipped with the completeness authentication arrangement means are connected to a network respectively, wherein the first and second communication apparatuses are equipped with both of completeness authentication protocol processing means for processing TCP or UDP by adding the completeness authentication information and ordinary protocol processing means for processing ordinary TCP or UDP without performing an addition of the completeness authentication information, the third communication apparatus is equipped with only an ordinary protocol processing means without being accompanied by the completeness authentication, when a communication is carried out between communication apparatus comrades (first communication apparatus and second communication apparatus) having the completeness authentication arrangement means, a communication is carried out by completeness authentication protocol processing means by being added with the completeness authentication information by means of the completeness authentication arrangement means and at the same time, when a communication apparatus having the completeness authentication arrangement means, for example, the first communication apparatus communicates with a communication apparatus not equipped with the completeness authentication arrangement means (the third communication apparatus), it is determined not to add said completeness authentication information so as to carry out a communication by said ordinary protocol processing means.

Also, in this case, when the communication apparatus which comprises completeness authentication arrangement means (first or second communication apparatus) communicates with the communication apparatus which does not comprise completeness authentication arrangement means (third communication apparatus), it is also possible to determine by completeness authentication arrangement means not to carry out communication so as not to carry out a communication.

Also, according to the present invention, a completeness authentication logic which can be a candidate to be arranged by aforesaid completeness authentication arrangement means is stored in a memory or mounted on a circuit, so that it is possible to further comprise completeness authentication logic changing means for changing aforesaid stored completeness authentication logic periodically.

Further, according to the present invention, it is possible for the completeness authentication arrangement means to arrange such that completeness authentication information addition and completeness authentication are not to be performed.

It should be noted also in such a case that it is possible to make good use of the cracking-protector (CP) function which prevents "camouflage", "approach" and "attack".

Also, the present invention offers a communication method for communicating by encrypting a protocol corresponding to TCP or UDP in the transport layer. This communication method comprises arrangement step for arranging an encryption and decryption logic which has correspondence therewith for both ends of a communication path beforehand; protocol encryption step for transmitting at least a protocol corresponding to the payload of the TCP or UDP in a packet which becomes an information unit to be transmitted and received by encrypting according to an encryption logic arranged; and protocol decryption step for decrypting the received encrypted protocol according to a decryption logic arranged, wherein a communication is carried out by applying an encryption process to the protocol corresponding to the TCP or UDP of the transport layer.

Also, in the communication method according to the present invention, a communication method is offered in a case when first and second communication apparatuses comprising arrangement means for arranging an encryption and decryption logic used for a communication method to communicate by encrypting a protocol corresponding to TCP or UDP in the transport layer and a third communication apparatus not comprising arrangement means for arranging an encryption and decryption logic are connected to the network respectively. More specifically, when a communication is carried out between the communication comrades (the first and second communication apparatuses) comprising arrangement means for arranging an encryption and decryption logic, a communication is carried out by encrypting the payload of the protocol corresponding to the TCP or UDP according to an encryption logic arranged by the arrangement means and when the communication apparatus comprising arrangement means for arranging an encryption and decryption logic (first or second communication apparatus) communicates with the communication apparatus not comprising arrangement means for arranging an encryption and decryption logic (the third communication apparatus), it is determined not to transmit the payload of the TCP or UDP protocol by encryption according to the encryption logic arranged by the arrangement means so as to communicate by an ordinarily TCP or UDP protocol which is not accompanied by the encryption logic.

Also, in a communication of the first or second communication apparatus with the third communication apparatus, it is also possible for the first or second communication apparatus to determine not to carry out the communication for the reason that the third communication apparatus does not comprise encryption and decryption arrangement means so as not to carry out the communication with aforesaid third communication apparatus.

Also, it is also possible to store an encryption and decryption logic which can be a candidate of arrangement for the arrangement of aforesaid encryption and decryption logic in a memory or a circuit so as to change the content of aforesaid stored encryption and decryption logic periodically.

Further, it is also possible in this arrangement step to arrange such that a plaintext is handled without encrypting with respect to the encryption and decryption logic. In addition, in the communication method according to the present invention, it is also possible to further include a step for authenticating the communication partner before the arrangement step.

The present invention also offers a communication method which communicates by encrypting a protocol corresponding to TCP or UDP existing in a transport layer and comprises completeness authentication arrangement step for arranging a completeness authentication logic which has correspondence therewith for both ends of a communication path beforehand; protocol completeness authentication information addition step for transmitting at least a protocol corresponding to the payload of the TCP or UDP in a packet of an information unit to be transmitted and received by adding completeness authentication information according to a completeness authentication logic arranged by the completeness authentication arrangement step; and protocol completeness authentication step for completeness-authenticating the received protocol added with the completeness authentication information according to a completeness authentication logic arranged by the completeness authentication arrangement step, wherein a communication is carried out by adding the completeness authentication information to the TCP or UDP protocol existing in the transport layer.

Then, the present invention further offers a communication method in which a communication is carried out through a network between communication apparatuses (first and second communication apparatuses) equipped with completeness authentication arrangement means for carrying out arrangement of completeness authentication by using TCP or UDP of a transport layer or between the communication apparatus equipped with aforesaid completeness authentication arrangement means and a third communication apparatus not equipped with aforesaid completeness authentication arrangement means. The communication method is constituted such that when the communication apparatus (for example, first communication apparatus) equipped with the completeness authentication protocol communicates with the communication apparatus (second communication apparatus) similarly equipped with the completeness authentication protocol, transmission is done by carrying out completeness authentication protocol process processing TCP or UDP added with the completeness authentication information by means of the completeness authentication arrangement means, and when the first or second communication apparatus equipped with the completeness authentication protocol communicates with the third communication apparatus not equipped with aforesaid completeness authentication protocol, it is determined by the completeness authentication arrangement means not to add the completeness authentication information and a communication is carried out by carrying our the ordinary protocol processing means processing the ordinary TCP or UDP.

It should be noted when the first or second communication apparatus communicates with the third communication apparatus which does not have completeness authentication arrangement means that it is also possible for the first or second communication apparatus not to carry out the communication for the reason that aforesaid third communication apparatus does not have completeness authentication arrangement means.

Also, it is possible for the present invention to further comprise a step in the completeness authentication arrangement step for storing a completeness authentication logic for adding completeness authentication information which can be a candidate to be arranged in a memory or for mounting it on a circuit; and completeness authentication logic changing step for changing aforesaid stored or mounted content periodically. In addition, it is also possible to further comprise a step for authenticating a communication partner before the completeness authentication arrangement step.

### BRIEF DESCRIPTION OF DRAWINGS

FIG. 1 is a diagram showing TCP2 protocol stacks used in a communication system according to the present invention;
FIG. 2 is a whole body constitutional diagram of a system in a first exemplified embodiment (EC application by TCPsec) of a communication system using TCP2 according to the present invention;
FIG. 3 is a whole body constitutional diagram of a system in a second exemplified embodiment (broadcasting application by UDPsec) of a communication system using TCP2 according to the present invention;
FIGS. 4A to 4C are diagrams showing packet structures of three protocol stacks in TCP2 according to the present invention and encryption regions and authentication regions thereof, wherein FIG. 4A, FIG. 4B and FIG. 4C are diagrams showing packet structures, each of encryption regions and application regions of completeness authentication with respect to TCPsec/IPsec, TCPsec/IP and UDPsec/IP respectively;
FIG. 5 is a flowchart diagram showing a TCP/TCPsec passive-open process which is an exemplified embodiment of TCP2 according to the present invention;
FIG. 6 is a flowchart diagram showing a TCP/TCPsec active-open process which is an exemplified embodiment of TCP2 according to the present invention;
FIGS. 7A and 7B are sequence diagrams showing a communication interaction between a standard TCP and a host A (active-open) and a host B (passive-open) of TCPsec according to the present invention;
FIG. 8 is a flowchart diagram showing detail of a TCP passive-open process S5 in FIG. 5;
FIG. 9 is a flowchart diagram showing detail of a TCPsec passive-open process S6 in FIG. 5;
FIG. 10 is a flowchart diagram showing detail of a TCP active-open process S12 in FIG. 6;
FIG. 11 is a flowchart diagram showing detail of a TCPsec active-open process S13 in FIG. 6;
FIG. 12 is a flowchart diagram showing detail of a TCPsec transmitting and receiving process S76;
FIG. 13 is a flowchart diagram showing detail of a TCPsec passive connection process S48 in FIG. 9;
FIG. 14 is a flowchart diagram showing detail of a TCPsec active connection process S88 in FIG. 11;
FIG. 15 is a flowchart diagram showing a UDP/UDPsec open process which is an exemplified embodiment of TCP2 according to the present invention;
FIG. 16 is a sequence diagram showing of a UDP/UDPsec unicast communication using TCP2 according to the present invention;
FIG. 17 is a flowchart diagram showing a UDP/UDPsec broadcast communication using TCP2 according to the present invention;
FIG. 18 is a flowchart diagram showing detail of a UDP open process S124 in FIG. 15;
FIG. 19 is a flowchart diagram showing detail of a UDPsec open process S125 in FIG. 15;
FIG. 20 is a flowchart diagram showing detail of a UDPsec broadcast receiving start process S141 in FIG. 19;
FIG. 21 is a flowchart diagram showing detail of a UDPsec unicast transmission starting process S146 in FIG. 19;
FIG. 22 is a flowchart diagram showing detail of a UDPsec data transmitting and receiving process S144 in FIG. 19;
FIG. 23 is a flowchart diagram showing detail of a UDPsec unicast receiving start process S137 in FIG. 19;
FIG. 24 is a diagram for explaining merits when comparing TCP2 according to the present invention with a case of applying conventional IPsec or SSL;
FIG. 25 is a diagram showing standard communication protocol stacks using conventional IPsec; and
FIG. 26 is a diagram showing standard communication protocol stacks using conventional SSL.

### BEST MODE FOR CARRYING OUT THE INVENTION

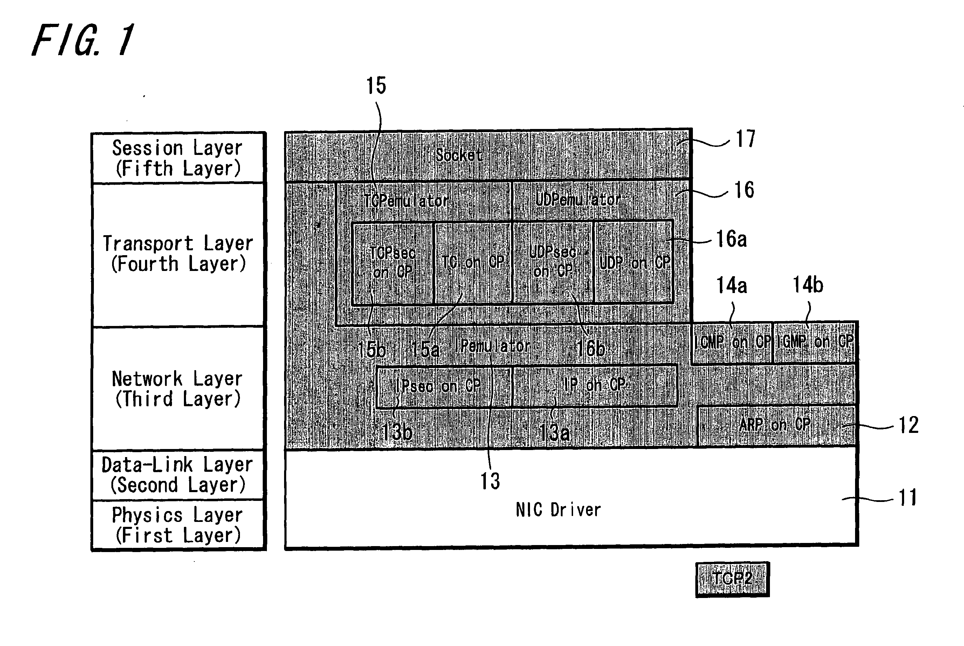

Hereinafter, examples of exemplified embodiments according to the present invention will be explained with reference to FIG. 1 to FIG. 24.

FIG. 1 shows protocol stacks used in one exemplified embodiment of an encryption communication system according to the present invention.

The protocol stacks used in the present invention is, as shown in FIG. 1, disposed with a driver 11 of NIC (Network Interface Card) in a hierarchy corresponding to a physics layer (first layer) and a data-link layer (second layer) of OSI7 hierarchies. This driver is, as already described, an interface card driver for connecting hardware of a computer or the like to a network and the content thereof is software for data transmission and reception control. For example, a LAN board or a LAN card for connecting to Ethernet corresponds thereto.

An IP emulator (emulator) 13 which is partially extended until the transport layer (fourth layer) exists in the network layer of the third layer. A function as transport is not mounted on aforesaid extended portion. It only offers a function of the network layer to the session layer. The IP emulator 13 is to carry out an operation of using "IPsec on CP" 13b which is a protocol carrying out an encryption communication and "IP on CP" 13a by switching according to an application. Here, the words "on CP" means that it is to be an objective for an observation of "approach" and "attack", cancellation, cutoff or passing restriction by means of a cracking-protector (CP) or means that it can be in a situation thereof by setting.

Also, the network layer is disposed with ARP on CP (Address Resolution Protocol on Cracking Protector). The ARP on CP is a protocol used for finding a MAC (Media Access Control) address which is a physical address of Ethernet from an IP address equipped with a protection countermeasure against a cracker. MAC is a transmission control technology utilized in LAN or the like and referred to as a medium access control and is utilized as a technology for defining a transmitting and receiving method of a frame which is a transmitting and receiving unit of data, a frame format, an error correction or the like.

Here, the IP emulator 13 is software or firmware for making present invention various kinds of security functions according to the present invention being matched with conventional IP periphery stacks. More specifically, it is an ICMP (Internet Control Message Protocol) 14a which is a protocol for transferring an IP error message or a control message, an IGMP (Internet Group Management Protocol) 14b which is a protocol for controlling a host group constituted for distributing same data to a plurality of hosts efficiently or for being received the distribution, TCP 15 and software, firmware or hardware (electronic circuit, electronic parts) for matching to UDP 16 and further to a socket (Socket) interface 17. It is possible by the IP emulator 13 to carry out an adaptation process before and after an IPsec encryption and decryption, a necessary authentication information addition and authentication or the like.

A TCP emulator 15 and a UDP emulator 16 are disposed in a transport layer (fourth layer) of an upper layer of the IP emulator 13. The TCP emulator 15 has an operation for using "TCPsec on CP" 15b which is a protocol for carrying out an encryption communication and "TCP on CP" 15a which is an ordinarily communication protocol by switching according to an application. Similarly, the UDP emulator 16 has an operation for using "UDPsec on CP" 16b which is a protocol carrying out an encryption communication and "UDP on CP" 16a which is an ordinarily communication protocol by switching according to an application.

The most specific feature of the present invention lies in that an encryption communication protocol of TCPsec 15b and UDPsec 16b is mounted in that transport layer (fourth layer). It is to be described later on with respect to TCPsec 15b and UDPsec 16b.

A socket interface 17 carrying out data exchange with a protocol of TCP, UDP and the like is provided in an session layer (fifth layer) which is an upper layer of the transport layer (fourth layer). The meaning of this socket corresponds to a network address, as already described, made by combining an IP address corresponding to an address in a network which a computer possesses with a port number which is a sub address of the IP address and practically, it consists of a single software program module carrying out addition or cancellation of a sequence of headers all together (execution program or the like) or a single hardware module (electronic circuit, electronic parts or the like).

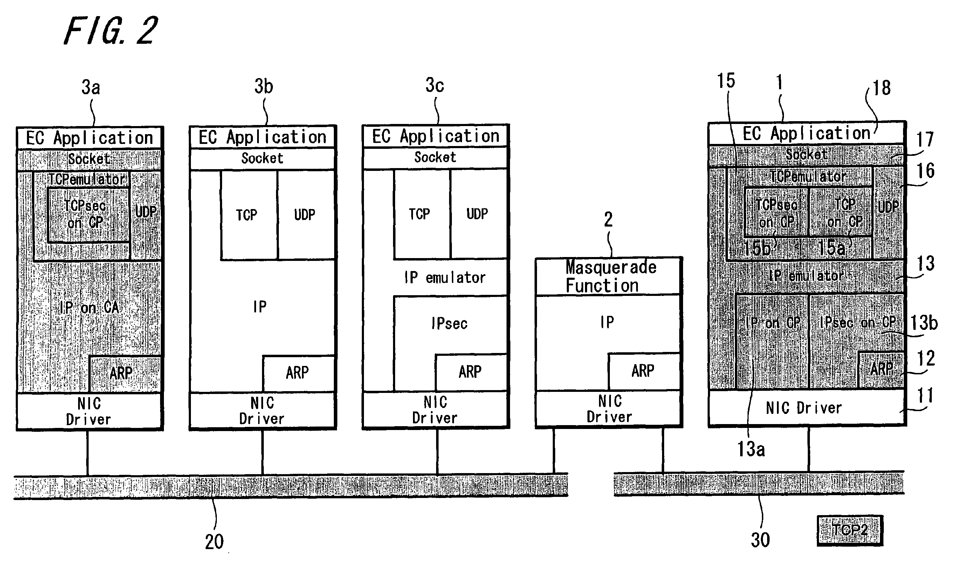

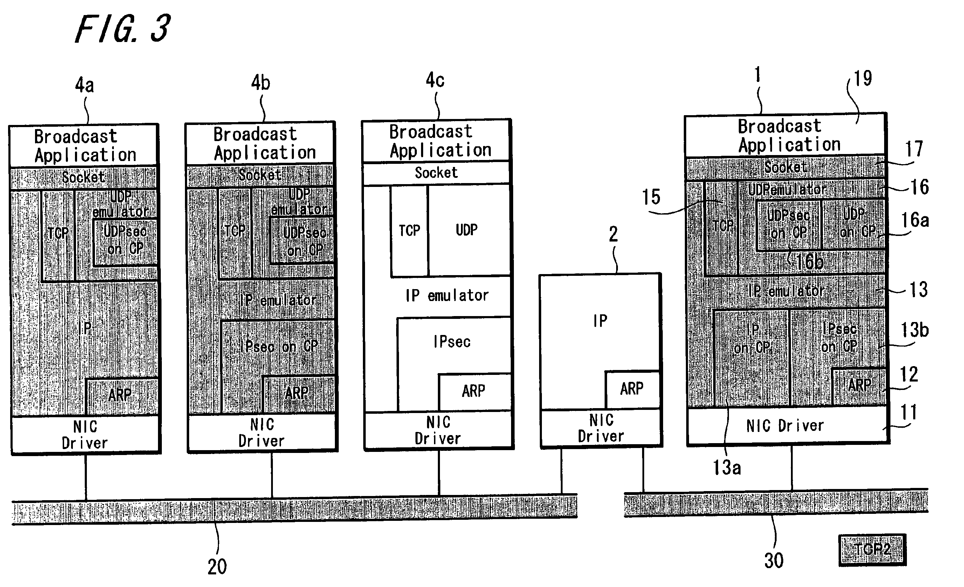

The socket interface 17 is one for offering a unified access system from a further upper application (EC application shown in FIG. 2, broadcasting application shown in FIG. 3 and the like) such that a similar interface is to be kept as usual with respect to kinds, types of arguments or the like.

The TCP emulator 15 has an operation in the transport layer for distributing packets to either one of the TCPsec 15b which possesses a function of preventing data leakage and falsifying, that is, a function of encryption, completeness authentication, partner authentication or the like and an ordinarily protocol TCP 15a which does not possess a function of such encryption, completeness authentication, partner authentication or the like. Also, anyone of TCPsec 15b and TCP 15a is provided with a cracking-protector (CP), so that it is possible to realize a defending function against "approach" and "attack" by a cracker even in a case when either one thereof is selected. The TCP emulator 15 also plays a role of interface with the socket positioned in an upper layer.

Also, as already described, the UDP does not have an error compensation function while the TCP has an error compensation function, but it has a feature that transfer speed thereof is rapid correspondingly and also a broadcast function is provided therein. The UDP emulator 16 has, similarly as TCP emulator 15, an operation for distributing packets to either one of the UDPsec 16b which possesses a function of preventing data leakage and falsifying, that is, a function of encryption, completeness authentication, partner authentication or the like and an ordinarily protocol UDP 16a which does not possess a function of such encryption, completeness authentication, partner authentication or the like.

As shown in FIG. 1, protocol stacks consisting of the socket 17, the TCP emulator 15, the UDP emulator 16, the "TCPsec on CP" 15b, the "UDPsec on CP" 16b, the "TCP on CP" 15a, the "UDP on CP" 16a, the "ICMP on CP" 14a, the "IGMP on CP" 14b, the IP emulator 13, the "IP on CP" 13a and the "ARP on CP" 12 are protocol stacks carrying out an encryption process according to the present invention and hereinafter, the name of the protocol stacks are to be generically called as TCP2 (under application procedure for a registered trademark). It should be noted that the "IPsec on CP" 13b is not included in TCP2 indispensably, but it is also possible to make "IPsec on CP" 13b to be included in TCP2.

TCP2 according to the present invention, a standard protocol of TCP, UDP, IP, IPsec, ICMP, IGMP and ARP is mounted with CP (cracking-protection) and it is possible to protect against an attack from a communication with respect to respective protocol stacks and against an attack (Trojan Horse, falsifying of a program or injustice use by a qualified user) from an application-program. Also, in TCP2, the TCP emulator 15 is mounted and this TCP emulator 15 keeps compatibility seen from the socket (Socket) 17 existing in the session layer and from the IP emulator 13 existing in the network layer, so that it is possible to be presented same as a standard TCP for its outward looking. Actually, TCP and TCPsec are switched so as to be executed as a TCP2 function. TCPsec is an encryption and authentication function in the transport layer according to the present invention.

Also, TCP2 is similarly mounted with a UDP emulator 16 and the UDP emulator 16 keeps compatibility seen from the socket (Socket) 17 existing in the session layer and from the IP emulator 13 existing in the network layer, so that it is possible to be presented same as a standard TCP for its outward looking. Actually, UDP and UDPsec are switched so as to be executed as a TCP2 function. UDPsec is an encryption and authentication function in the transport layer according to the present invention.

Next, it will be explained with respect to the TCPsec 15b and the UDPsec 16b being a function for preventing "data leakage" which is a particularly important function in TCP2.

A publicly known secret key (common key) encryption algorithm is used as an encryption and decryption method (algorithm and logic (logic)) for the TCPsec 15b and the UDPsec 16b. For example, a DES (Data Encryption Standard) which is a secret key encryption algorithm developed by IBM company in 1960s or a 3DES as its improved version is used. Further, an IDEA (International Data Encryption Algorithm) announced by Mr. James L. Massey and Mr. Xuejia Lai of Swiss Institute of Technology in 1992 is also used for other encryption algorithms. This encryption algorithm has 128 bits for the a length of a cryptograph key, because data are encrypted by being divided into a block of 64 bits. It is designed so as to possess enough strength also with respect to a linear decryption method for decrypting the secret key cryptograph efficiently or a difference decryption method.

In addition, a cryptograph system such as called FEAL (Fast data Encipherment Algorithm), MISTY or AES (Advanced Encryption Standard) is also utilized as a cryptograph system of the TCPsec 15b and the UDPsec 16b which are used in the present invention and further, it is also possible to utilize a secret encryption and decryption algorithm created independently. Here, FEAL is a cryptograph system developed by Nippon Telegraph and Telephone Corporation (Old Name at that time) and is a cryptograph system of a secret key type which uses the same key for the encryption and the decryption. This FEAL has an advantage that encryption and decryption are realized with a high speed as compared with DES.

Next, MISTY which is a cryptograph system similarly utilized in the present invention is a cryptograph system of a secret key type developed by Mitsubishi Electric Corporation and data are encrypted by being divided into a block of 64 bits just like IDEA. The key length is 128 bits. It is same as DES or the like in that the same program is used for the encryption and the decryption. This system is also designed so as to possess enough strength also with respect to a linear decryption method for decrypting the secret key cryptograph efficiently or a difference decryption method.

Also, AES is a standard encryption system for the next generation of the U.S. Government for which a selecting operation is carried out by the standard technical office of the US. Department of Commerce and the development thereof was promoted as a cryptograph standard of the next generation for taking the place of DES which is a standard cryptograph system now. A system called Rijndael which was developed by Mr. Joan Daemen and Mr. Vincent Rijmen who are Belgium cryptograph developers was employed in October 2000 among some cryptograph systems collected around the world by inviting public participations.

In this manner, various kinds of secret key encryption algorithms which were already known can be employed as a cryptograph system of the TCPsec 15b and the UDPsec 16b according to the present invention and moreover, it is possible other than that to utilize also a secret key (common key) cryptograph system developed by a user independently.

Further, an authentication algorithm of an algorithm utilizing a public key or secret pre-sharing (Pre-shared) such, for example, as MD5 (Message Digest 5), SHA1 (Secure Hash Algorithm 1) or the like is used as a method of "partner authentication" and "completeness authentication" for preventing so-called "camouflage" and "data falsifying" or the like. Also, it is also possible to employ an original algorithm utilizing a unidirectional function in place of such a publicly known authentication algorithm.

This MD5 is one of hash functions (unidirectional summary functions) which are used for authentication and digital signature in which it becomes possible to detect whether or not an original text is falsified on a halfway of a communication by generating a hash value of a fixed length based on the original text and by comparing this on both ends on the communication path. This hash value takes a value such as a quasi random number and it is made to be unable to reproduce the original text based thereon. In addition, it is made also difficult for another message for creating the same hash value to be created.

SHA1 is also one of hash functions which are used for authentication, digital signature or the like in which it becomes possible to detect falsifying of an original text on a halfway of a communication by creating a 160 bits hash value from the original text of 64th power of 2 or less bits and by comparing on the both ends of the communication path. This authentication algorithm is employed also in IPsec which is a representative of conventional internet encryption communications.

It should be noted that it is designed with respect to these authentication algorithms such that a secure key exchange can be carried out by means of DH (Diffie-Hellman) public key distribute method, IKE (Internet Key Exchange) protocol (No. 500 of UDP) similar as IPsec or the like and furthermore, it is scheduled by a protocol driver program (TCPsec 15b, UDPsec 16b or the like) such that encryption/completeness authentication algorithm (logic) itself and the set/domain of the key for that purpose will be changed periodically.

Next, it will be explained according to FIG. 2 with respect to an encryption communication using an encryption system TCP2 (particularly, TCPsec) which is a first exemplified embodiment of the present invention. FIG. 2 is an example of a communication to be applied particularly to an EC (Electronic Commerce: E-commerce) application.

FIG. 2 is a diagram showing a whole body constitute in a case when client terminals 3a, 3b and 3c for the EC application which are connected to a network 20 are connected to a host computer (communication apparatus functioning as a so-called server) connected to other network 30 by way of a network control apparatus 2 such as a so-called router or gateway.

The client terminals 3b and 3c within the client terminal 3a, the client terminal 3b and the client terminal 3c which are connected to the network 20 are not mounted with TCP2 of the present invention. In other words, the client terminals 3b and 3c are not mounted with TCPsec or UDPsec which is a protocol for the encryption system of the present invention either. The client terminal which supports TCP2 is only 3a. Then, it is constituted with respect to the client terminal 3b such that a connection by an ordinarily protocol process according to a setting, not shown, of a network policy and more specifically, a connection of an encryption function for preventing "data leakage" and of a completeness authentication function for preventing "data falsifying" with respect to the TCP level and a connection without being accompanied by a partner authentication function for preventing "camouflage" are to be completed.

Application software for the EC is mounted in an upper layer of the socket with respect to anyone of the client terminals 3a to 3c. Also, a host computer 1 connected to the network 30 is equipped with TCP2 and EC application software 18 is mounted in an upper layer of its socket 17. Non-used protocol of UDPsec or the like is omitted in FIG. 2, but the structure of the protocol stacks of the host computer 1 is equipped with all of the software constituting TCP2 which is the structure of the protocol stacks shown in FIG. 1.

More specifically, first, a NIC driver (NIC driver) 11 is disposed across the first layer (physics layer) and the second layer (data-link layer) and an ARP (Address Resolution Protocol) 12 and an IP emulator 13 are disposed in the network layer of its upper layer (third layer). Then, the TCP emulator 15 and the UDP 16 are disposed in the transport layer of the fourth layer. The reason why there is no description of the UDP emulator (including UDPsec and UDP) in FIG. 2 is because TCPsec with emphasis on error compensation rather than speed is to be used for an encryption communication with respect to an EC application of the first exemplified embodiment. This does not mean that the host computer is not equipped with UDPsec. The fact that TCP2 is equipped means that both of UDPsec and TCPsec are equipped as already explained.

The client terminals 3a, 3b and 3c connected to the network 20 and the protocol stacks of the network control apparatus 2 by way of the host computer 1 connected to the network 30 are constituted by an NIC driver, an ARP and a firmware (electronic circuit with nonvolatile memory) cumulated with IP as stacks.

Also, the client terminal 3a is a terminal supporting TCP2 of the present invention and here, protocol stacks are shown as a terminal comprising a communication apparatus having correspondence with only TCPsec. The client terminals 3b and 3c do not support TCP2 of the present invention.

The client terminal 3a is mounted with protocol driver software which is distributed beforehand through a network or through a recording medium such as a CD-ROM. In addition, protocol driver software is distributed beforehand similarly also with respect to the client terminal 3b and the client terminal 3c and is mounted thereon.

Particularly, with respect to the client terminal 3c, IPsec which is a conventional encryption system is mounted thereon and it is constituted such that IPsec cannot be used effectively, because the network control apparatus (router) 2 carries out IP masquerade being referenced to a TCP port number. Further with respect to the client terminal 3c, it is constituted to cancel the connection request according to the setting, not shown, of the network policy. It should be noted that it is a well-known matter for a person skilled in the art with respect to confirmation (receiving packet analysis or the like) itself of such a setting of the network policy or whether or not the protocol is mounted, so that the explanation thereof will be omitted in the present specification.

When the host computer 1 communicates with the client terminal 3a, the communication is to be carried out according to an encryption and decryption arrangement based on TCP2 of the present invention and particularly on TCPsec, but when the host computer 1 communicates with the client terminal 3b or 3c, the communication is to be carried out in a condition that the encryption and decryption arrangement based on TCP2 (particularly, TCPsec) of the present invention is not done, in other words, according to an ordinarily TCP protocol. It is needless to say in a case when the host computer 1 communicates with the client terminal 3c supporting IPsec that an encryption communication based on IPsec can be carried out naturally. It should be noted that it is possible to stop the communication by the operation of TCP2 which the host computer 1 have even if the host computer 1 tries to communicate with the client terminal 3b or 3c not equipped with TCP2.

Also, the host computer 1 and the client terminal 3a are to carry out an exchange of an encryption and decryption logic through a network according to this exemplified embodiment, but it is needless to say that it is also possible to exchange an arrangement logic for encryption and decryption between communication partner comrades beforehand by using a removable medium such as an FD, a CD, a UDB memory or the like.

Next, it will be explained according to FIG. 3 with respect to encryption communication using an encryption system of UDPsec in TCP2 which is a second exemplified embodiment of the present invention. FIG. 3 is a diagram showing a whole body constitute of a communication system where client terminals 4a, 4b and 4c for a broadcasting application which are connected to a network 20 communicate with a host computer (communication apparatus functioning as a so-called server) 1 connected to other network 30 by way of a network control apparatus 2 such as a so-called router or gateway.

FIG. 3 shows client terminals 4a, 4b and 4c and protocol stacks of the host computer 1 wherein client terminals which support TCP2 are 4a and 4b. In other words, only the terminal4a and 4b are provided with UDPsec. Application software for a broadcast is mounted in an upper layer of a socket of each client terminal. In addition, the host computer 1 connected to the network 30 is also equipped with TCP2 and broadcasting application software 19 is mounted in an upper layer of a socket 17 thereof. Similarly as the host computer 1 of FIG. 2, the host computer 1 of FIG. 3 is also equipped with all of the software constituting TCP2 which has a structure of the protocol stacks of FIG. 1.

The protocol stacks possessed by the host computer 1 are almost same as the protocol stacks of the host computer 1 in FIG. 2 and the different constitution thereof from the protocol stacks of the host computer 1 in FIG. 2 lies in that a UDP emulator 16 exists instead of a TCP emulator. This is because a large amount of data of videos or the like are handled in broadcasting application software such that a high speed characteristic is attached more importance than error compensation in case of data transmission or the like.

The client terminals 4a, 4b and 4c connected to the network 20 and the protocol stacks of the network control apparatus 2 by way of the host computer 1 connected to the network 30 are constituted by an NIC driver, an ARP and a firmware (electronic circuit with nonvolatile memory) cumulated with IP as stacks.

Also, the client terminal 4a is a terminal supporting TCP2 of the present invention and here, is a terminal provided with a communication apparatus having correspondence with only UDPsec, the client terminal 4b is a communication apparatus having correspondence with UDPsec of the present invention and with publicly known IPsec and the client terminal 4c is a communication apparatus having correspondence only with publicly known IPsec. The client terminal 4c does not support TCP2 of the present invention. These client terminals 4a to 4c are mounted with protocol driver software which is distributed beforehand through a network or through a recording medium such as a CD-ROM similarly as the client terminals 3a to 3c in FIG. 2.

Also, with respect particularly to the encryption and decryption logic for preventing "data leakage" and the authentication information addition and authentication logic for preventing "data falsifying", it is necessary to make correspondence between the host computer 1 and client terminals 4a, 4b and 4c. It is possible to carry out an arrangement according to a similar policy as that for the publicly known and so-called IPsec, but protocol driver software itself is distributed beforehand in the second exemplified embodiment of the present invention, so that it is also possible to arrange a secret key or the like by a more concise original protocol or to use packets having a simpler structure. Also, it is also possible to mount encryption, decryption and authentication algorithm (logic) itself which is not publicly known encryption, decryption and authentication algorithm but independently created one as a software module of the protocol driver or the like.

It should be noted that the client terminal 4c is not mounted with TCP2, but publicly known IPsec to be utilized in an internet is mounted thereon, so that it is possible therein to make a secure communication to a certain degree based thereon. However, the clients 4a and 4b are used by being mounted without IPsec but with UDPsec which is a constitutional element of TCP2 according to the present invention for the performance of the objective broadcasting application or as a matter of convenience in security policy. The reason why UDPsec is utilized instead of IPsec is that IPsec itself has fragility such, for example, as lowering in performance caused by a fact that a UDP port number portion (belonging to IP payload) is encrypted by IPsec or the like.

Also, by embedding a partner authentication protocol which judges whether or not the communication partner is correct present invention into TCP of TCP2 or UDP protocol stacks, that is, into TCPsec or UDPsec, it is possible to carry out a communication partner authentication function between communication partners bilaterally without being conscious of a higher rank application. In this case, it is also possible to increase communication packet numbers, packet length or the like substantially within the range in which the cost does not increase.

Also, in case of utilizing UDPsec which is an encryption system according to the present invention when a broadcast function for transmitting data particularly toward unspecified number of partners is carried out in the network, the client terminals 3a and 3b which receive the broadcast start negotiation (arrangement) and obtain communication partner authentication or the secret key for communication. Then, it is not possible for the client terminal 3a and 3b to decrypt delivered data by UDPsec from the host computer 1 until the secret key for the communication is obtained after carrying out authentication of the communication partner.

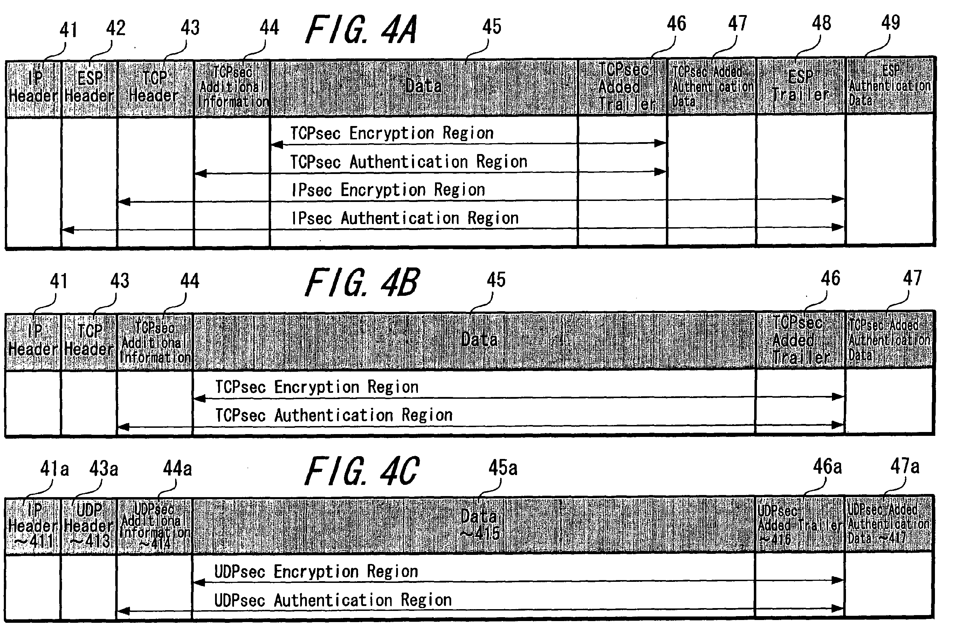

Next, it will be explained according to FIGS. 4 with respect to packet structures which are transmitted and received in the communication of the first and second exemplified embodiments, their encryption regions and the application regions of the completeness authentication according to the present invention.

FIG. 4A shows a packet structure of TCPsec/IPsec and each of encryption regions and application regions of completeness authentication, and FIGS. 4B and 4B respectively show TCPsec/IP, a packet structure of UDPsec/IP and each of encryption regions and application regions of completeness authentication.

As shown in FIG. 4A, the packet structure of TCPsec/IPsec has an IP header 41 subsequent just after an ESP header 42 of IPsec. It is constituted such that a TCP header 43 and additional information 44 of TCPsec are provided subsequently and followed by application data 45 thereafter. Then, a TCPsec added trailer 46 which is information for supporting cryptograph data such as data blank occurring in block cryptograph, its blank length, the number of the next header or the like is disposed after the application data 45 and thereafter, added authentication data 47 of TCPsec are disposed. Then, it is made to be a packet structure such that an ESP trailer 48 for IP and ESP authentication data 49 are disposed further thereafter.

Among those above, the portion shown by the numerals 41, 42, 48 and 49 is information for IPsec and the numeral 43, 44, 46 and 47 are information relating to TCPsec which plays a main role of TCP2 according to the present invention. TCPsec is also is disposed here according to IPsec, but it should be noted that it is possibly utilized depending on employed encryption or algorithm of authentication even if the additional information 44 of TCPsec and the added trailer 46 are omitted or the added authentication data 47 of TCPsec is reduced.

In the packet structure of TCP2 shown in FIG. 4A, the encryption is carried out by two systems of TCPsec and IPsec. In this case, first on the transmission side, the TCPsec side is first encrypted and TCPsec authentication data are added. Next, IPsec is encrypted and IPsec authentication data are to be added. Then, on the reception side, IPsec is decrypted first, received packet data are verified by the IPsec authentication data, subsequently the TCPsec side is decrypted and received packet data are verified by TCPsec authentication data.

In this manner, encryption is carried out by using two kinds of encryption algorithms of IPsec and TCPsec and further completeness authentication is carried out with respect to data having a packet structure as shown in FIG. 4A, so that it is possible to establish a remarkably strong encryption communication system against an invasion or the like from outside as compared with a system using only IPsec. The region encrypted by TCPsec is the portion of the application data 45 and the TCPsec added trailer 46 and for the authentication region by TCPsec, the TCPsec additional information 44 is further added to aforesaid encryption region. It should be noted that the encryption region encrypted by conventional IPsec is only a portion from the TCP header 43 until the ESP trailer 48 and its authentication region becomes a region from the ESP header 42 until the ESP trailer 48.

FIG. 4B shows a packet structure of TCPsec/IP which is different from FIG. 4A and the structure thereof is made such that the TCP header 43 and the TCPsec additional information 44 follow just after the IP header 41 and further, the application data 45 follows. Then, it is constituted such that the added trailer 46 of TCPsec which is information for supporting cryptograph data of a data blank occurring in the block cryptograph, its blank length, the number of next header or the like and the added authentication data 47 of TCPsec are disposed after the application data 45.

Here, the numerals 43, 44, 46 and 47 become characteristic information for TCPsec. However, as mentioned above, it is possible depending on the employed encryption/authentication algorithm to disperse these of information into unused header field portions of TCPsec/IP or the like or to omit them by a dependent and prior arrangement (negotiation) which cannot be counted backward or guessed from the individual packet. Also, by constituting TCPsec/IP packets as shown in FIG. 4B using a protocol field which does not use TCP and IP corresponding to an upper layer of the IP layer, it becomes possible to reduce the packet length easily less than an IPsec packet which is focused only on IP of a lower layer. It should be noted that the encryption region here is the application data 45 and the TCPsec added trailer 46 as shown in the drawing and the authentication region is added with the additional information 44 of TCPsec other than aforesaid encryption region.

FIG. 4C is to show a packet structure of UDPsec/IP in the present invention and it becomes information necessary for a UDPsec additional information 44a, a UDPsec added trailer 46a and a UDPsec added authentication data 470 to support UDPsec. This encryption region is an application data 45a and a UDPsec added trailer 46a as shown in the drawing and the authentication region is added with the UDPsec additional information 44a other than the aforesaid encryption region.

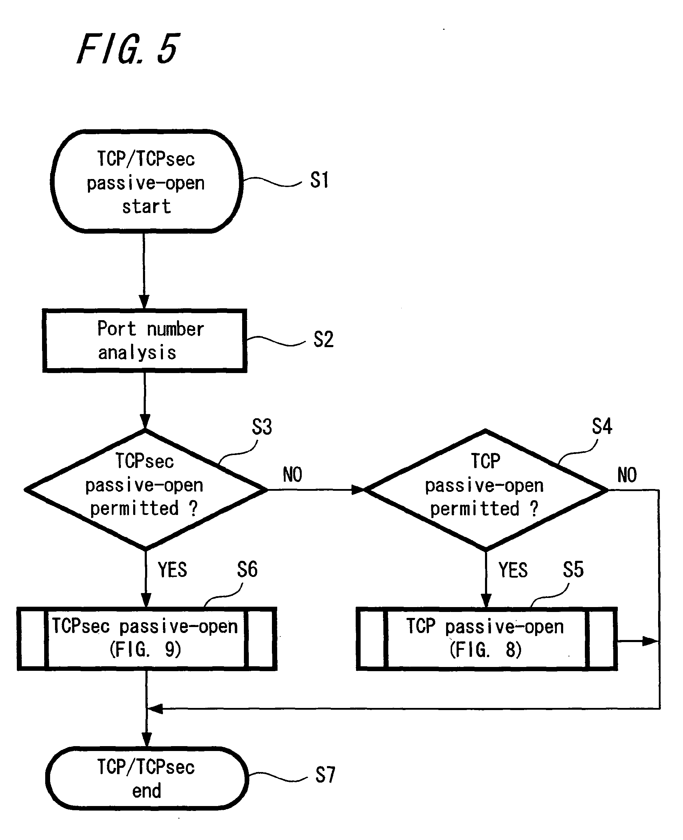

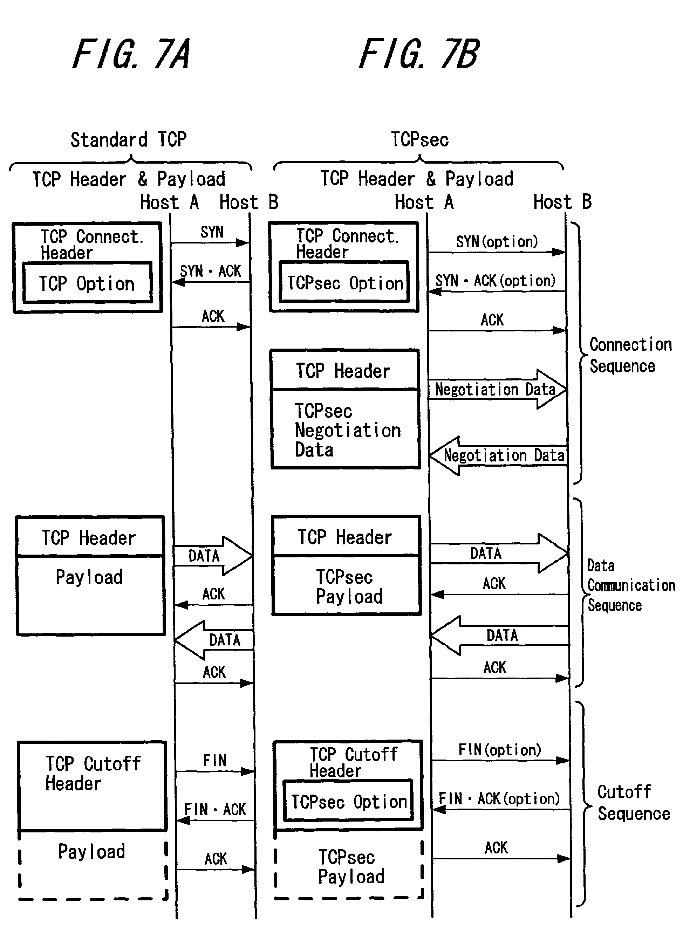

Next, it will be explained with respect to the operation of the encryption process system using TCPsec which is a first exemplified embodiment of the present invention according to flowchart diagrams shown in FIGS. 5 and 6 and FIGS. 8 to 14 and a sequence diagram shown in FIG. 7.

FIG. 5 is a process flowchart diagram in TCP and TCPsec passive-open (Open of connection waiting which corresponds to a host B of FIG. 7 and, for example, Web server opens on this condition.) and this TCP/TCPsec passive-open process starts in a case when connection waiting is opened in a higher rank application-program (step S1). It should be noted that when describing FIG. 7, a process on the host B side corresponds to this portion.

First, analysis of a port number to be opened is carried out first (step S2). In this analysis, for example, its definition condition is confirmed by using a TCP port No. 80 in case of Web server. Then, it is judged next whether or not this port No. 80 is permitted for TCPsec passive-open (step S3) . In a case when TCPsec passive-open is not permitted in step S3, it is judged this time whether or not TCP passive-open is permitted (step S4). In a case when TCP passive-open is not permitted in judging step S4 either, not only TCPsec but also TCP are found not to be permitted and TCP/TCPsec passive-open fails in vain, so that the process will be discontinued (step S7).

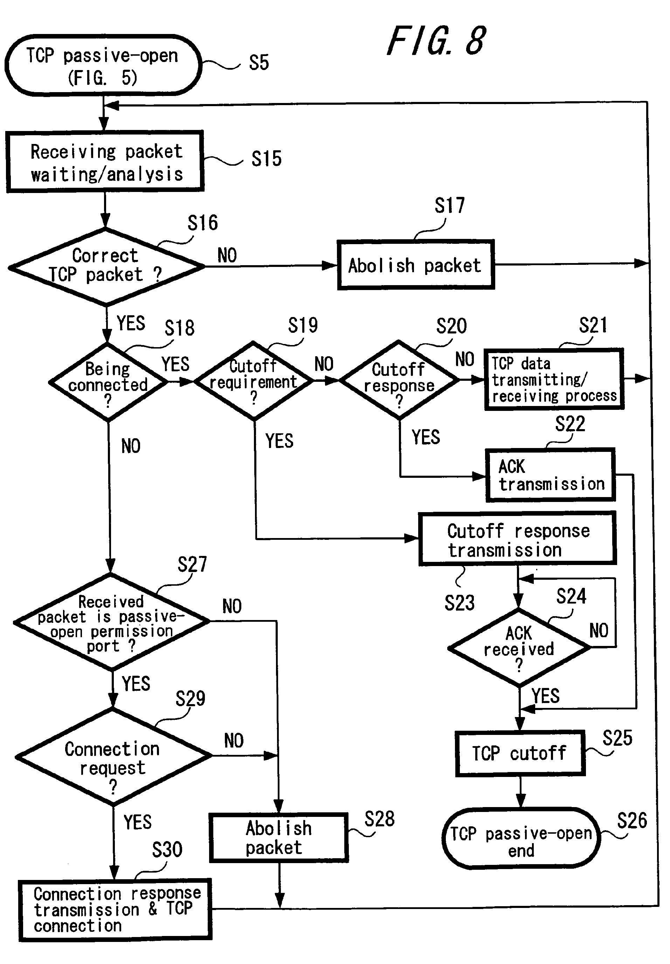

In a case when TCP passive-open is permitted in judging step S4, more specifically when TCP passive-open is permitted while TCPsec passive-open is not permitted, TCP passive-open process shown in FIG. 8 to be described hereinafter will be executed (step S5).

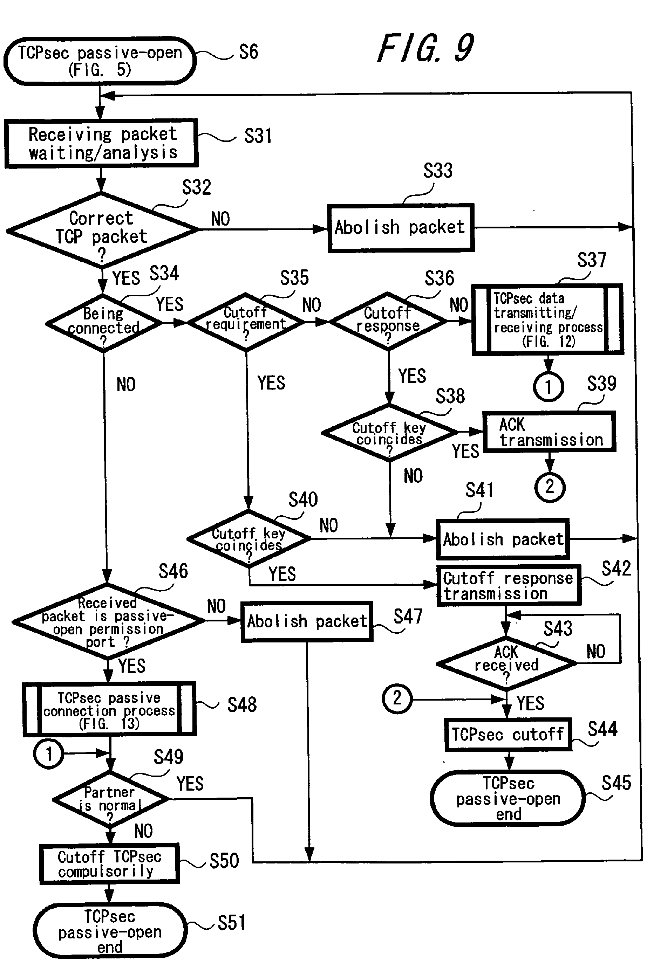

In a case when permission condition of TCPsec passive-open is confirmed in judging step S3, similarly TCPsec passive-open process shown in FIG. 9 to be described hereinafter will be executed (step S6).

When the TCP passive-open process or the TCPsec passive-open process in step S5 or step S6 is ended, the TCP/TCPsec passive-open process will end (step S7). In this manner, passive-open is carried out by TCP from an application of a higher rank in the present example in which based on the judgment of TCP2, if TCPsec is supported, a communication is to be carried out by TCPsec and if TCPsec is not supported, a communication is to be carried out by TCP.

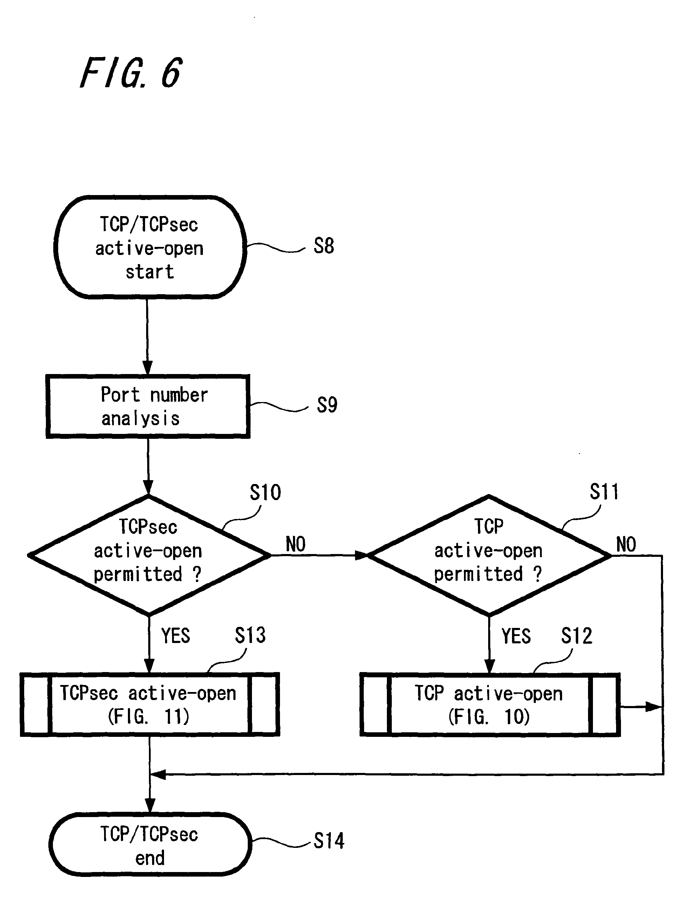

Next, it will be explained according to FIG. 6 with respect to an active-open process of TCP and TCPsec of the present invention. The active-open of TCP/TCPsec means an open of a connection request and, for example, a client terminal mounted with a Web browser is to be opened on this condition. With reference to FIG. 7, a process on the host A side corresponds thereto. FIG. 6 is a flowchart diagram of a process in this active-open and in a case when a connection request open is performed in a higher rank application-program, an active-open process of this TCP/TCPsec is made to start (step S8).

First, an analysis of a port number to be opened is carried out first (step S9) . This analysis confirms definition condition of a TCP port No. 3000 in a case when, for example, a client terminal application mounted with a Web browser tries to use the TCP port No. 3000.

Next, it is judged whether or not TCPsec active-open is permitted with respect to the port No. 3000 (step S10). In a case when it is judged in step S10 that the TCPsec active-open is not permitted, it is judged subsequently whether or not TCP active-open is permitted (step S11). In a case when TCP active-open is not permitted in judging step S11 either, either one of TCPsec and TCP active-open was not to be permitted and the TCP/TCPsec active fails, so that a connect process is discontinued (step S14).

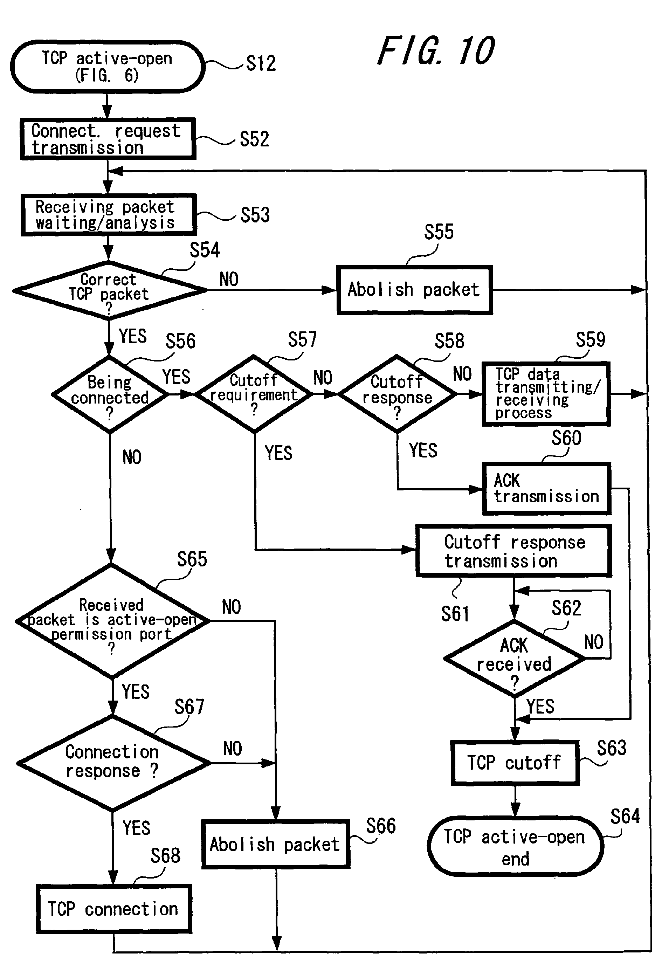

In a case when TCP active-open is permitted in judging step S11 and more specifically, when TCP active-open is permitted while TCPsec active-open is not permit, a TCP active-open process shown in FIG. 10 to be described hereinafter will be executed (step S12).

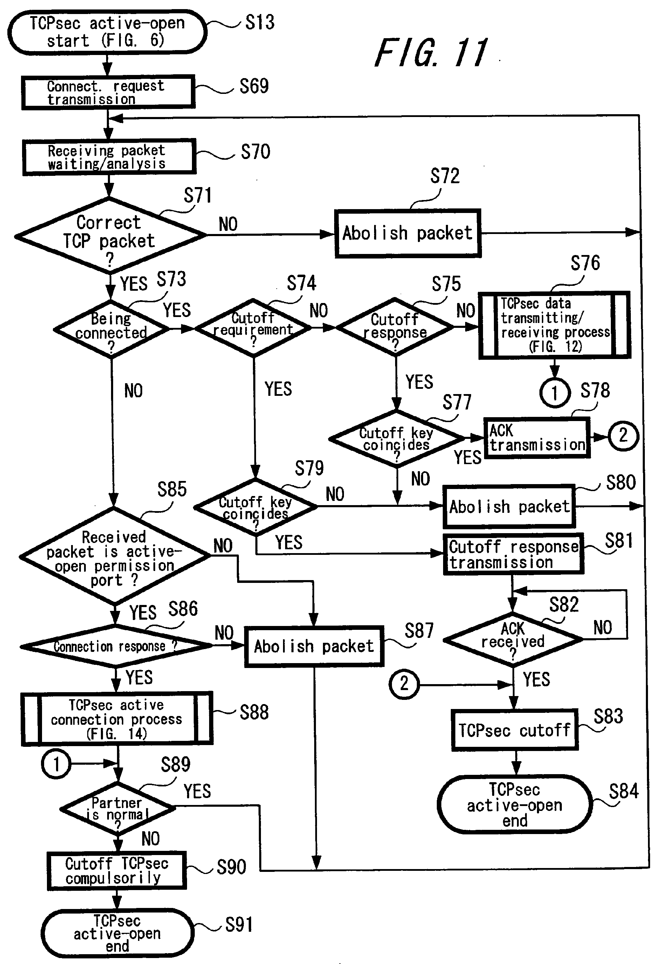

In a case when permission condition of TCPsec active-open is confirmed in judging step S10, a TCPsec active-open process shown in FIG. 11 to be described hereinafter will be executed (step S13).

When the TCPsec active-open process or the TCPsec active-open process in step S12 or step S13 is ended, the TCP/TCPsec active-open process is ended (step S14). Also in case of TCP/TCPsec active-open, active open is carried out by TCP from an application of a higher rank similarly as the case of TCP/TCPsec passive-open (FIG. 5), and according to the judgment of TCP2, a communication is carried out by TCPsec if TCPsec is supported and a communication is to be carried out by TCP if TCPsec is not supported.

Next, a communication process using TCPsec of the present invention will be explained with respect to a sequence process between a host A on the active-open side and a host B on the passive-open side according to FIG. 7.

FIG. 7 is a diagram showing a connection sequence when TCPsec which is a cryptograph processing protocol of the present invention is used, a data communication sequence and a cutoff sequence by comparing with standard TCP. FIG. 7A is diagram showing a standard TCP and FIG. 7B is a diagram showing a communication sequence when TCPsec of the present invention is used.

As shown in FIG. 7A, an application of the host B is TCP passive-open and an application of the host A is TCP active-open in the standard TCP.

When the application of the host B becomes TCP passive-open, a TCP passive-open process (see step 5 of FIG. 5 and FIG. 8) is started and it becomes a condition of waiting for a reception as shown in step S15 of FIG. 8 to be described hereinafter. When the application of the host A becomes TCP active-open, a TCP active-open process (see step S12 of FIG. 6 and FIG. 10) is started and a connection request (SYN) is transmitted from the host A with respect to host B as shown in step S52 of FIG. 10 to be described hereinafter. In this manner, the connection sequence of the standard TCP becomes a start condition.

On the host B side, when this connection request (SYN) is received, receiving packet analysis of this connection request is ended and a connection response (SYN/ACK) is transmitted to the host A side. Here, ACK is abbreviation of Acknowledgement and it is to be transmitted when data transfer is ended normally or the like. On the host A side, when this connection response (SYN/ACK) is received, ACK (acknowledgment) that a connection is completed is transmitted and the connection sequence of the standard TCP is ended.

When ending the connection sequence of this standard TCP, a data communication sequence by the standard TCP becomes effective and data transmitting and receiving is carried out by repeating a fundamental pattern such that ACK (acknowledgment) is returned from the side which received data after either one of the host A side and the host B side transmits data.

In this data communication sequence of the standard TCP, it is possible for either one of the host A and the host B to carry out cutoff request with respect to its partner.

It is shown in FIG. 7A a case in which a cutoff request is transmitted from the host A on the active-open side with respect to the host B on the passive-open side. When there is a cutoff request from the application of the host A, the host A transmits cutoff request (FIN). When the host B receives this cutoff request (FIN), it transmits a cutoff response (FIN/ACK) as shown in step S23 of FIG. 8 to be described hereinafter. The host A transmits ACK (acknowledgment) when it receives this cutoff response (FIN/ACK) and the cutoff sequence of the standard TCP is ended.

Next, a communication sequence by TCPsec of the present invention will be explained according to FIG. 7B. In FIG. 7B, the application of the host B is TCPsec passive-open and the application of the host A is TCPsec active-open.

When the application of the host B becomes TCPsec passive-open, a TCPsec passive-open process (see step S6 of FIG. 5 and FIG. 9) is started and it becomes a condition of waiting for reception as shown in step S31 of FIG. 9 to be described hereinafter. When the application of the host A becomes TCPsec active-open, a process of TCPsec active-open (see step S13 of FIG. 6 and FIG. 11) is started, a connection request (SYN) is transmitted from the host A with respect to the host B as shown in step S69 of FIG. 11. In this manner, the TCPsec connection sequence becomes a start condition. It should be noted that TCP2 inherent information is added by being encrypted to the connection request (SYN) as an option so as to notify to the counter partner that a correct partner is connected. More specifically, it is possible to confirm whether or not the terminal of the counter partner is a terminal for supporting TCP2, in other words, whether or not it is a correct partner to communicate with before next TCPsec negotiation data are exchanged between the host A and the host B.

When the connection request (SYN) transmitted from the host A is received on the host B side, a connection response (SYN/ACK) is transmitted with respect to the host A in case of a correct partner. Then, the host A side transmits ACK (acknowledgment) when the connection response (SYN/ACK) is received from this host B. Subsequently, TCPsec negotiation data are exchanged between the host A and the host B and the TCPsec connection sequence is ended if it is a correct partner.

When this connection sequence is ended, a TCPsec data communication sequence becomes effective and after either one of the host A side and the host B side transmits data, data transmitting and receiving are carried out by repeating a fundamental pattern in which ACK (acknowledgment) is returned from data receiving side. Here, it is needless to say that these data are all cryptograph data.

It should be noted in the TCPsec data communication sequence that it is possible for either one of the host A and the host B to make a cutoff request with respect to the other partner. In FIG. 7B, the cutoff is started from the host A of the active-open side. When there is a cutoff request from the application of the host A, the host A transmits a cutoff request (FIN). It is to be possible to notify to the counter partner that it is a correct partner by adding TCP2 inherent information by encryption to this cutoff request (FIN) as an option. When the host B receives this cutoff request (FIN), it transmits, in case of a correct partner, a cutoff response (FIN/ACK) as shown in step S42 of FIG. 9 to be described hereinafter. When the host A receives this cutoff response (FIN/ACK), it transmits ACK (acknowledgment) and the TCPsec cutoff sequence is ended.

As mentioned above, the sequence from the connection to the cutoff of the communication was explained according to FIG. 7 with respect to standard TCP and TCPsec which is one of TCP2 of the present invention and hereinafter, it will be explained with respect to passive-open processes and active-open processes of TCP and TCPsec in the order thereof according to a flowchart diagram.

First, it will be explained in step S5 of the flowchart diagram in FIG. 5 with respect to details in a case when a TCP passive-open process starts according to a flowchart diagram of FIG. 8.

In a case when the protocol processed in step S5 of FIG. 5 is determined to be TCP, a TCP passive-open process of this FIG. 8 starts. First, reception waiting is carried out and analysis of a received receiving packet is carried out (step S15). Subsequently, it is judged whether or not this received packet is a correct packet, in other words, whether or not it is a TCP protocol attack pattern in a DoS attack (step S16). Then, in a case when it is judged as an injustice packet as a result of the judgment of step S16, the received packet is abolished (step S17) and receiving of a next packet will be waited for.

In a case when it was judged in judging step S16 that the received packet is a correct TCP packet, it is judged subsequently whether or not it is connected, in other words, whether or not the connection sequence of the host A and the host B in FIG. 7 is completed (step S18). In a case when it is judged in judging step S18 that it is connected, it is judged next whether or not the packet is for a cutoff request (FIN of FIG. 7A) (step S19). If it is not for a cutoff request, it is judged subsequently whether or not it is for a cutoff response (FIN/ACK of FIG. 7A) (step S20). In a case when it is neither for a cutoff request nor for a cutoff response, a transmitting and receiving process of TCP data is performed (step S21), and in a case when the received packet is for a cutoff response, ACK is transmitted from the host A of FIG. 7 and TCP connection will be cutoff (step S25). When it is judged in judging step S19 that it is a cutoff request from the host A, a cutoff response is transmitted from the host B with respect thereto (step S23).

In a case when a cutoff response is transmitted in step S23, final ACK will be waited for (step S24). Then, TCP will made to be a cutoff condition after the final ACK is received (step S25), and the TCP passive-open is ended (step S26).

In a case when it is judged in judging step S18 that the receiving port is not in a connected condition, it is judged whether or not the received packet is a passive-open permission port (step S27). Then, in a case when the received packet is not permitted, the received packet is abolished (step S28) and a next packet will be waited for. Also, in a case when it is judged in judging step S27 that the received packet is of passive-open permission, it is judged whether or not the next packet is a connection request (step S29), and in a case when it is not a connection request, the packet is abolished (step S28) and a next packet will be waited for. Also, in a case when it is judged as a connection request in judging step S29, a connection response is transmitted and it will be made to be a TCP connecting condition (step S30).

Next, it will be explained according to a flowchart diagram of FIG. 9 with respect to details of the process step S6 in TCPsec passive-open of FIG. 5. As shown in step S6 of FIG. 5, this process is a process in a case when the process of the received packet is determined to be a TCPsec process. First, reception waiting is carried out and a received receiving packet is analyzed (step S31). Subsequently, it is judged whether or not this received packet is a correct packet, in other words, whether or not it is a TCP protocol attack pattern in a DoS attack (step S32). Then, in a case when it is judged as an injustice packet as a result of the judgment of this step S32, the received packet is abolished (step S33), the flow returns to step S31 and receiving of a next packet will be waited for.

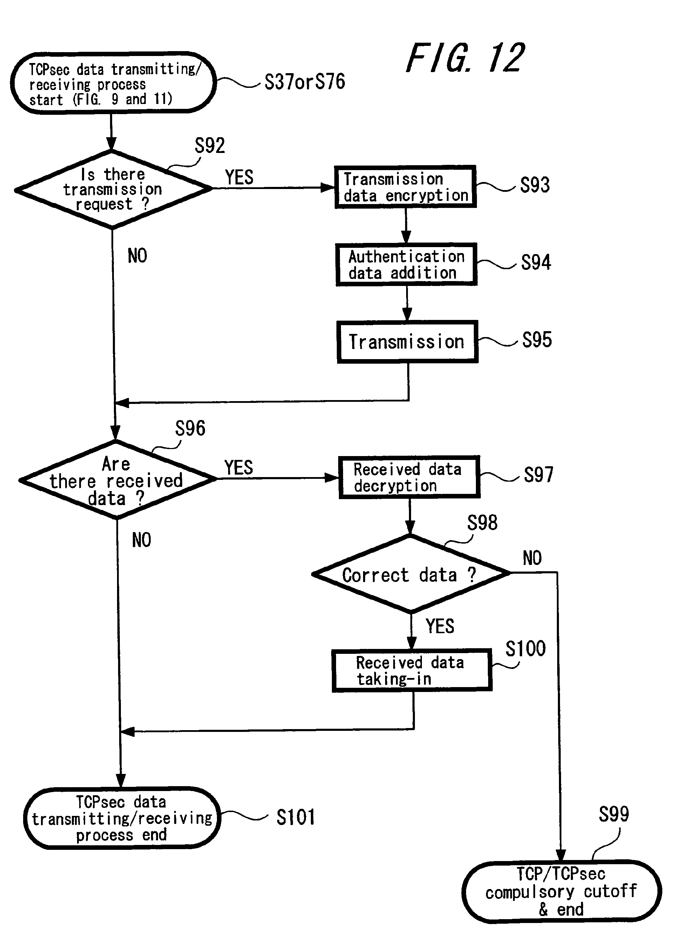

In a case when it is judged in judging step S32 that the received packet is a correct packet, it is judged subsequently whether or not the connection of the host A and the host B is completed (whether or not being connected) (step S34). In a case when it is judged in judging step S34 that the host A and the host B are connected, it is judged next whether or not the received packet is a cutoff request (FIN) (step S35). If it is not a cutoff request, it is judged this time whether or not the received packet is a cutoff response (FIN/ACK) (step S36). Then, in a case when the received packet is neither a cutoff request nor a cutoff response, a TCPsec data transmitting and receiving process shown in FIG. 12 to be described hereinafter is carried out (step S37) and the flow proceeds to step S49. Next, in a case when there is a cutoff response in judging step S36, it is judged whether or not the cutoff key coincides (step S38) . Here, the cutoff key means a common key (secret key) in a negotiation between the host A and the host B for a connection sequence of FIG. 7, whose agreement was concluded and it is made possible to cutoff a communication between both sides only when this key coincides. In a case when the cutoff key coincides in judging step S38, ACK is transmitted (step S39) and TCPsec between the host A and the host B is cutoff (step S44). In a case when the cutoff key does not coincide in judging step S38, the packet is abolished as an injustice packet (step S41) and a next receiving packet will be waited for. In addition, also in a case when it is judged in judging step S35 that the received packet is a cutoff request (FIN), it is judged whether or not the cutoff key coincides (step S40). Then, in a case when the cutoff key does not coincide, the received packet is abolished as an injustice packet (step S41), and in a case when the cutoff key coincides, a transmission of a cutoff response (FIN/ACK) is carried out (step S42). In a case when a cutoff response was transmitted in step, final ACK from the partner is waited for (step S43), and when this final ACK is received, TCPsec is made to be in a cutoff condition (step S44) and the TCPsec passive-open is ended (step S45).

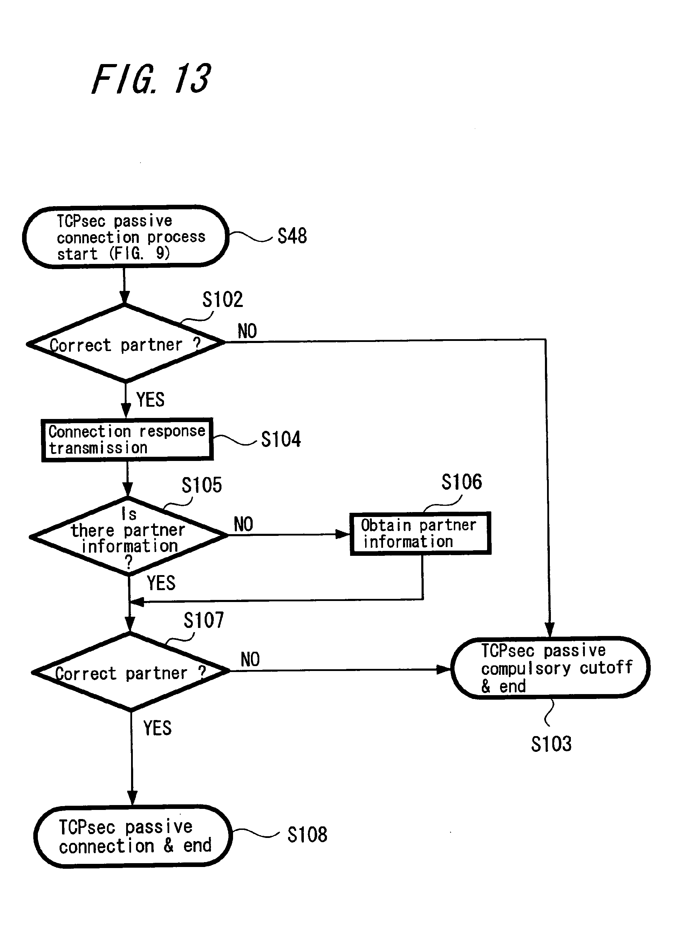

In a case when it is judged in judging step S34 that the host A and the host B are not connected, it is judged whether or not the received packet is a passive-open permission port (step S46). Then, in a case when the received packet is not a passive-open permission port, the received packet is abolished (step S47), the flow returns to step S31 and a next packet will be waited for. Also, in a case when it is judged in judging step S46 that the received packet is to be a passive-open permission port, a TCPsec passive connection process shown in FIG. 13 to be described hereinafter is executed (step S48).

Subsequently, it is judged according to the common key and the authentication data whether or not the communication partner is normal, in other words, whether or not it is a partner possessing right authority (step S49). If it is judged as a normal partner, the flow returns to step S31 and a next receiving packet is waited for, but if it is judged that the communication partner is not a normal partner, the TCPsec connection is cutoff compulsorily (step S50) and the TCPsec passive-open process is ended (step S51).

Next, it will be explained according to a flowchart diagram of FIG. 10 with respect to a TCP active-open process shown in step S12 of FIG. 6.

FIG. 10 is a diagram showing a process in a case when the processing protocol in FIG. 6 is determined to be TCP and first, a connection request (SYN) is transmitted from the transmission side host A with respect to the reception side host B (step S52). When a connection response (SYN/ACK) with respect to this connection request is transmitted from the reception side host B, reception waiting is carried out next and analysis of the received packet is carried out (step S53). Next, it is judged whether or not this received packet is a correct packet, in other words, whether or not it is a TCP protocol attack pattern in a DoS attack (step S54). In a case when it is judged as a result of the judgment in step S54 that it is an injustice packet, the received packet is abolished (step S55), the flow returns to step S53 and reception of a next packet will be waited for.

In a case when it is judged in judging step S54 that the received packet is a correct packet, it is judged subsequently whether or not the transmission side (active side) host A and the reception side (passive side) host B are in a connected condition (step S56). In a case when it is judged in this judging step S56 that they are connected, it is judged next whether or not the received packet is a cutoff request from the transmission side host A with respect to the reception side host B (step S57). If this is not a cutoff request, it is judged this time whether or not it is a cutoff response (FIN/ACK) from the reception side host B with respect to the transmission side host A (step S58). If it becomes neither a cutoff request nor a cutoff response, a TCP data transmitting and receiving process is carried out (step S59) and a next receiving packet is waited for. If it is judged as in judging step S58 that it is a cutoff response from the host B to the host A, the host A transmits ACK for affirming the cutoff (step S60) so as to cutoff TCP (step S63).

In a case when the received packet is a cutoff request in judging step S57, a cutoff response is transmitted from the host B with respect to the host A (step S61) and the host B waits for the reception of the final ACK from the host A (step S62). Then, TCP is made to be in a cutoff condition after host B receives the final ACK from the host A (step S63) and the TCP active-open is ended (step S64).

In a case when it is judged in judging step S56 that the transmission side host A and the reception side host B is not in a connected condition, it is judged whether or not the received packet is an active-open permission port (step S65) . Then, in a case when the received packet is not permitted, the received packet is abolished (step S66) and a next packet is waited for. Also, in a case when it is judged in judging step S65 that the received packet is to be active-open permission, it is judged next whether or not there was a connection response from the reception side host B (step S67) and if there is no connection response, the packet is abolished (step S66) and a next packet is waited for, and in a case when a connection response is performed from the reception side host B, it is made to be a TCP connection condition (step S68), the flow returns to step S53 and a next receiving packet will be waited for.

Next, it will be explained according to a flowchart diagram of FIG. 11 with respect to a detailed process in a case when a TCPsec active-open in step S13 of FIG. 6 is started.

The process shown in the flowchart diagram of FIG. 11 is to start in a case when the protocol processed in step S13 of FIG. 6 is determined to be TCPsec. First, a connection request (SYN) is transmitted from the transmission side host A with respect to the reception side host B (step S69). On the other hand, when there is a connection response (SYN/ACK) from the reception side host B, reception of a packet starts and analysis of the received packet is carried out (step S70).

Next, it is judged as a result of the received packet analysis whether or not the received packet is a correct TCP packet and more specifically, whether or not it is not a TCP protocol attack pattern in a DoS attack (step S71) . In a case when it is judged as this result that it is an injustice packet, that packet is abolished (step S72), the flow returns to step S70 and a next packet is waited for.

In a case when it is judged in judging step S71 that the received packet is a correct TCP packet, it is judged next whether or not the connection of the transmission side host A and the reception side host B is completed (whether or not being connected) (step S73). Then, if the host A and the host B is in connected condition, it is judged this time whether or not the received packet is a cutoff request (FIN) (step S74). When the received packet is not a cutoff request, it is judged next whether or not there is a cutoff response from the reception side host B (step S75). In a case when there is neither a cutoff request nor a cutoff response, a TCPsec data transmitting and receiving process shown in FIG. 12 is carried out (step76) and thereafter, the flow proceeds to step S89.

In a case when there was a cutoff response in judging step S75, it is judged whether or not the cutoff key coincides (step S77). With respect to this cutoff key, it is all the same as that explained in FIG. 9. In a case when the cutoff key coincides in judging step S77, ACK is transmitted from the transmission side host A with respect to reception side host B (step S78) and TCPsec between the host A and the host B is cutoff (step S83). In a case when the cutoff key does not coincide in judging step S77, the packet is abolished for the reason of an injustice packet (step S80) and a next receiving packet will be waited for. In addition, also in a case when it is judged in judging step S74 that the received packet is a cutoff request (FIN), it is judged whether or not the cutoff key coincides (step S79). Then, in a case when the cutoff key does not coincide, the received packet is abolished for the reason of an injustice packet (step S80), and in a case when the cutoff key coincides, transmission of a cutoff response (FIN/ACK) is carried out (step S81). In a case when a cutoff response is transmitted in step S81, the final ACK from the partner is waited for (step S82) and when this final ACK is received, TCPsec is made to be a cutoff condition (step S83) and the TCPsec active-open is ended (step S84).

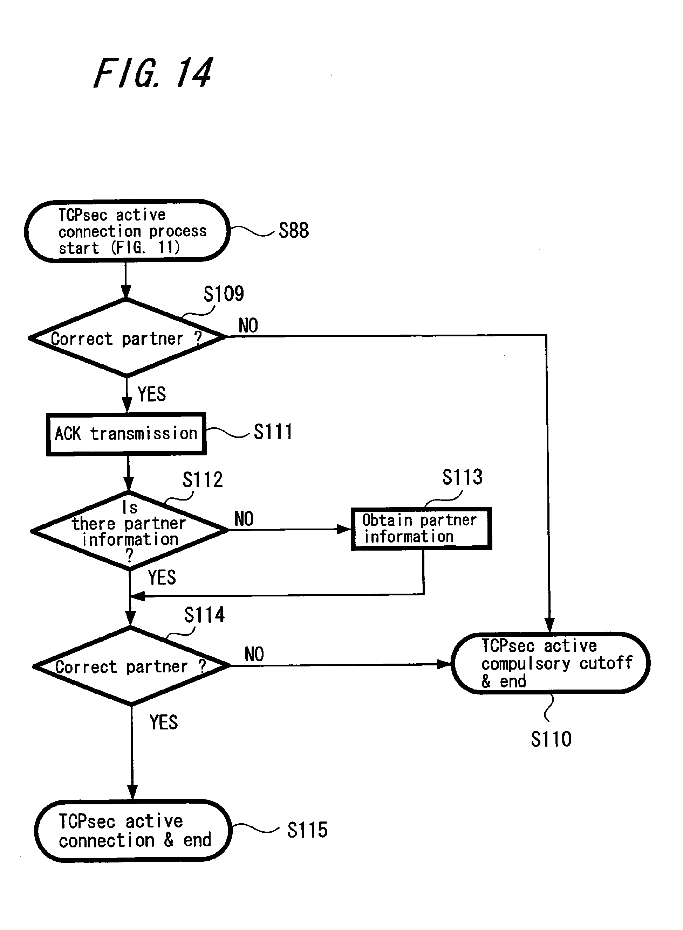

In a case in judging step S73 when a connection of the transmission side host A and the reception side host B is not completed, that is, not being connected, it is judged whether or not the received packet is an active-open permission port (step S85). Then, in a case when the received packet is not permitted, that received packet is abolished (step S87), the flow returns to step S70 and a next packet is waited for. Also, in a case when the received packet is judged to be of an active-open permission in judging step S85, it is judged whether or not the received packet is a packet of a connection response (SYN/ACK) from the reception side host B (step S86), and in a case when it is not a packet of a connection response, the packet is abolished (step S87) and a next packet will be waited for, and in a case when it is judged as a connection response packet in judging step S86, a TCPsec active connection process the detail of which is shown in FIG. 14 is carried out (step S88).

When the TCPsec active connection process is performed in step S88, it is judged next whether or not the reception side host B is a normal partner, in other words, whether or not it is a partner for which the connection is permitted (step S89). Then, if it is judged as a partner for which the connection is allowed, the flow returns to step S70, a next packet reception is waited for, and when it is judged in step S89 that it is a partner for which the connection is not permitted, the transmitting and receiving by TCPsec is cutoff compulsorily (step S90) and the TCPsec active-open is ended (step S91).

Next, it will be explained according to a flowchart diagram of FIG. 12 with respect to details of a TCPsec data transmitting and receiving process in a case when step S37 of FIG. 9 and step S76 of FIG. 11 mentioned above are selected.

First, when the TCPsec data transmitting and receiving process starts in step S37 of FIG. 9 and step S76 of FIG. 11, it is judged first whether or not there is a transmission request from a higher rank application of the host A (step S92). Then, in a case when there is a transmission request from a higher rank application of the host A, the transmission data is encrypted in the transmission side host A (step S93) authentication data are added thereto (step S94) and a packet encrypted and added with authentication data is transmitted to the reception side host B (step S95).

Next, it is judged whether or not there are received data (step S96) and in a case when there are received data, decryption of the received data is carried out (step S97) . Next, is judged whether or not the received and decrypted data are correct data (step S98). This judgment is carried out by confirming the decrypted data and the received authentication data and in a case when it is judged as a result of confirming the decoded data that they are not correct data, the TCP/TCPsec is cutoff compulsorily (step S99) . This compulsory cutoff is carried out by abolishing the receive data and at the same time, by performing a cutoff request to the transmission side. In a case when it is judged in the judging step S98 that the decrypted data are correct data, taking in of the received data and more specifically, data delivery to higher rank protocol stacks is carried out (step S100), and the TCPsec data transmitting and receiving process is completed (step S101).

Next, it will be explained according to a flowchart diagram of FIG. 13 with respect to a minute process in a case when a TCPsec passive connection process starts in step S48 of FIG. 9.

First, it is judged whether or not the partner is a correct partner, in other words, whether or not it is a computer having authority for connecting to its own computer (step S102) and in a case when it is not a correct partner, a process for cutting-off TCPsec compulsorily is carried out (step S103). If it is judged in judging step S102 that the connection partner is a correct partner, a connection response is transmitted from the reception side host B (step S104).

Then, it is confirmed whether or not there is information of the partner who transmitted the connection response within the own computer (step S105). In a case when there is not the partner information within the computer, the partner information is obtained from the present system, more specifically, from the install server used when TCP2 is installed (step S106) . Alternatively, the flow proceeds to step S107 by obtaining the partner information from the server of third party authentication. As for the obtaining information, it is possible to use one or a plurality of TCP2 ID on the partner side, user ID, password, biometrics information, apparatus-inherent information, LAN connecting apparatus information and the like. It should be noted that it is necessary to carry out the obtaining operation anew even in a case when the own computer already possesses the obtaining information from the server if it goes beyond the term of validity or the number of times of effective uses.

Next, it is judged whether or not the partner information corresponds to the correct partner, that is, whether or not it is a partner admitted for accessing the own computer (step S107). Here, if the connecting partner is a correct partner, the TCPsec passive connection is completed (step S108), but in a case when it is not a correct partner, TCPsec compulsory cutoff is carried out so as to stop the connection (step S103).

Next, it will be explained according to a flowchart diagram of FIG. 14 with respect to a minute process in a case when a TCPsec active connection process starts in step S88 of FIG. 11.

Similarly as a case of the passive connection process in FIG. 13, first, it is judged whether or not the partner who requested a connection is a correct partner, in other words, whether or not it is a communication from a partner having authority for accessing the own computer (step S109). If it is a communication from a partner who does not have rightly accessing authority, the TCPsec active connection is cutoff compulsorily so as to end the flow (step S110).

If it is judged as a correct partner in judging step S109, an affirmative connection response (ACK) is transmitted from the transmission side host with respect to the reception side host B (step S111).

Next, it is judged whether or not the own computer possesses information of the partner side (step S112). In a case when there is no partner information within the computer, the partner information is obtained from the present system, more specifically, from the install server used when TCP2 is installed (step S113). Alternatively, the flow proceeds to step S114 by obtaining the partner information from the server of third party authentication. Here, as for the obtaining information similarly as step S106 of FIG. 13, it is possible to use one or a plurality of TCP2 ID on the partner side, user ID, password, biometrics information, apparatus-inherent information, LAN connecting apparatus information and the like. It should be noted that it is necessary to carry out the obtaining operation anew even when the own computer already possesses the obtaining information from the server if it goes beyond the term of validity or the number of times of effective uses.

Next, it is judged whether or not the partner information corresponds to the correct partner, that is, whether or not it is a partner admitted for accessing the own computer (step S114). If the connecting partner is a correct partner, the TCPsec active connection is completed (step S115), but in a case when it is not a correct partner, TCPsec compulsory cutoff is carried out so as to stop the connection (step S110).

As mentioned above, it was explained within TCP2 of the present invention with respect to the passive-open and active-open communication processes using TCP/TCPsec.

Next, it will be explained with respect to a communication system and a communication method using UDP/UDPsec, such as shown in FIG. 3, which is a second exemplified embodiment according to the present invention.

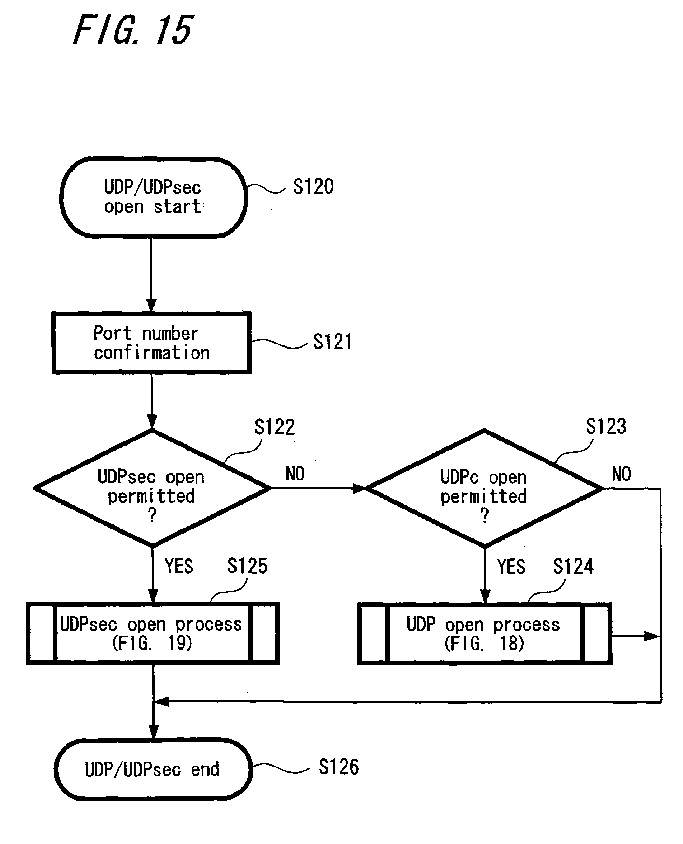

FIG. 15 is a flowchart diagram for explaining with respect to a passive-open process of UDP/UDPsec which is used in the second exemplified embodiment of the present invention.

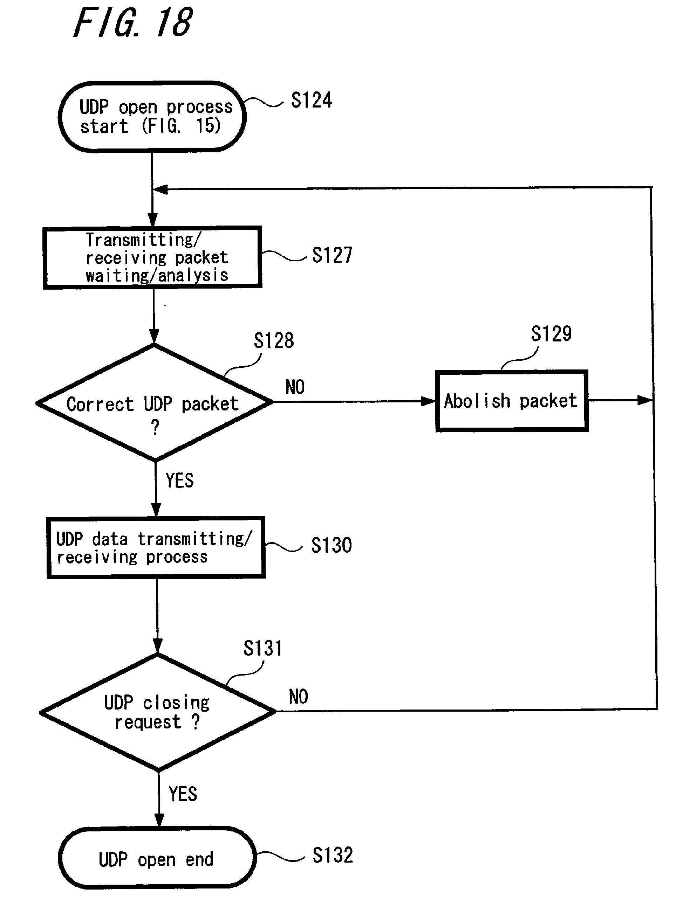

This process starts from a higher rank application-program (step120). First, analysis of the port number to be opened, more specifically, definition condition of the port number is confirmed (step121). Next, it is judged whether or not the port number is made to be UDPsec open (step S122). In a case when it is not made to be UDPsec open, it is judged whether or not UDP is open (step123). Then, in a case when neither UDPsec nor UDP is permitted to be open UDP/UDPsec will be ended (step S126). In a case when UDP is permitted to be open in judging step S123, that is, in a case when UDP is permitted to be open while UDPsec is not permitted to be open, a UDP open process shown in FIG. 18 is carried out (step S124) and also, in a case when UDPsec is open in judging step S122, a UDPsec open process is carried out whether or not UDP is open (step S125) and the UDP/UDPsec open process is ended (step S126). It should be noted that it is possible from an application of a higher rank to communicate by UDPsec or UDP according to TCP2 judgment even if an open condition is carried out for UDP.

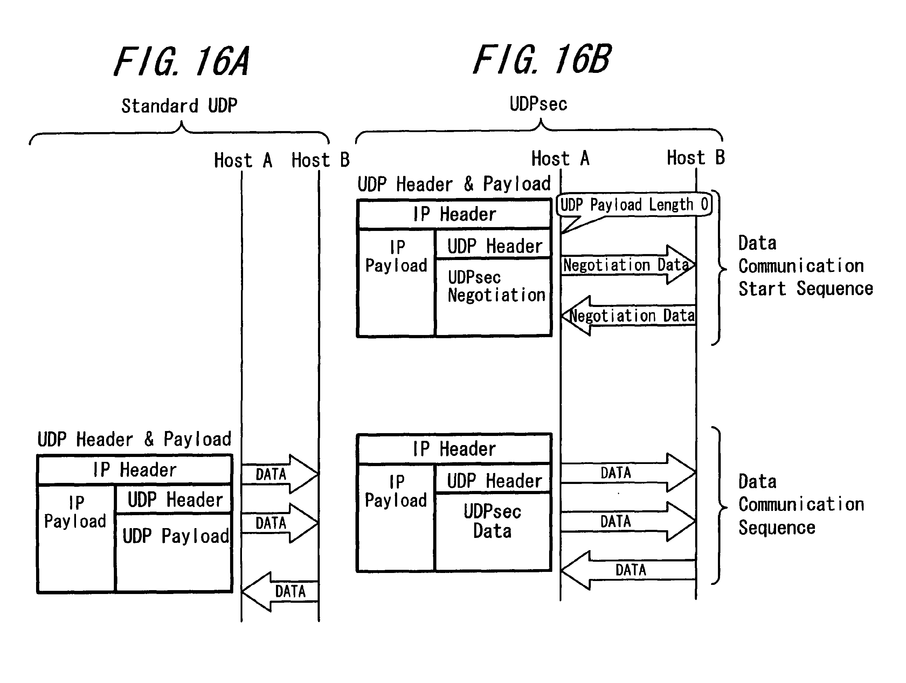

Next, it will be explained according to FIG. 16 with respect to a sequence process in a unicast communication using UDP/UDPsec, which is one of a second exemplified embodiment of the present invention.

FIGS. 16 is a diagram for explaining a packet (constituted by header and payload) of a start sequence and a data communication sequence of a unicast communication in standard UDP and in UDPsec within TCP2 of the present invention and for explaining a flow thereof.

FIG. 16A shows a communication sequence using standard UDP and FIG. 16B shows a sequence of an encryption communication by UDPsec.

The standard UDP of FIG. 16A shows an example in which applications are UDP open both for the host A and the host B. When an application of the host B becomes UDP open, a UDP open process (see step S124 of FIG. 15 and FIG. 18) starts. Also, in a case when an application of the host A becomes UDP open, aforesaid UDP open process starts similarly. In this manner, it becomes possible to carry out a UDP data communication. Here, in the unicast communication shown in FIG. 16A, data transmission is possible from either one of the host A and the host B.

Next, a communication process sequence by UDPsec which is one of TCP2 encryption systems according to the present invention will be explained.

FIG. 16B an example of a case in which an encryption communication is carried out according to UDPsec possessed by TCP2 of the present invention and this example shows a case in which it is judged that applications are UDP open in both of the host A and the host B and TCP2 is open by UDPsec.

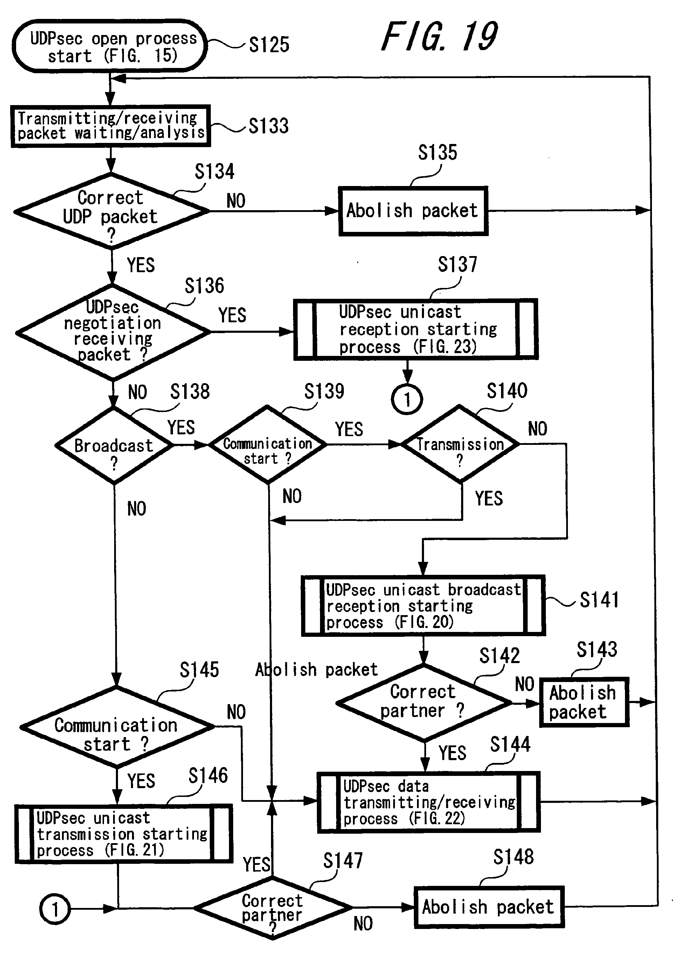

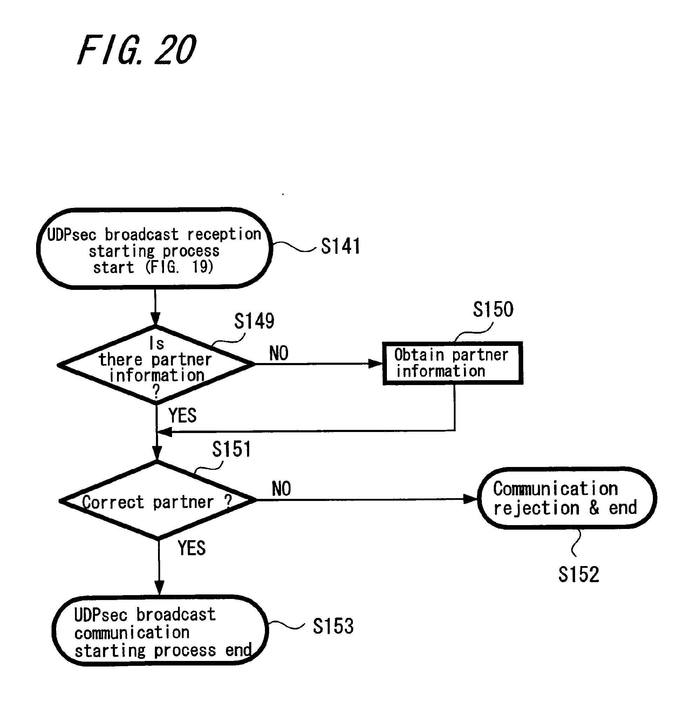

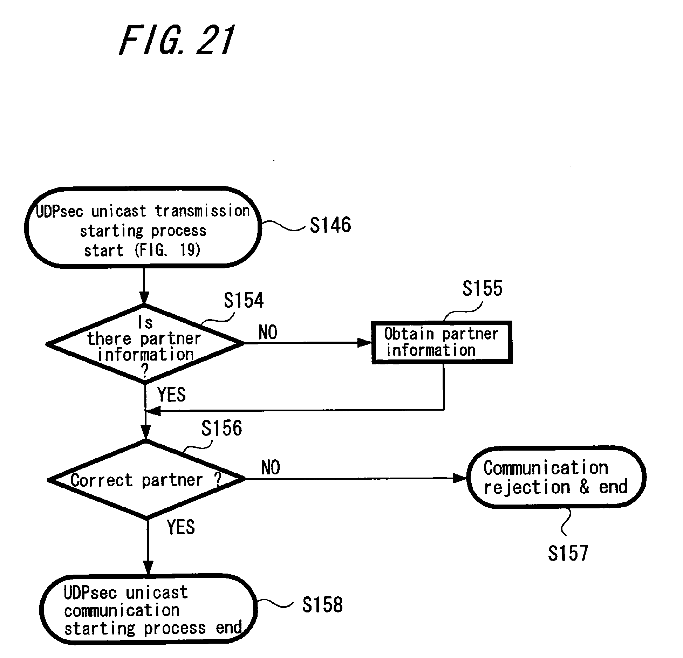

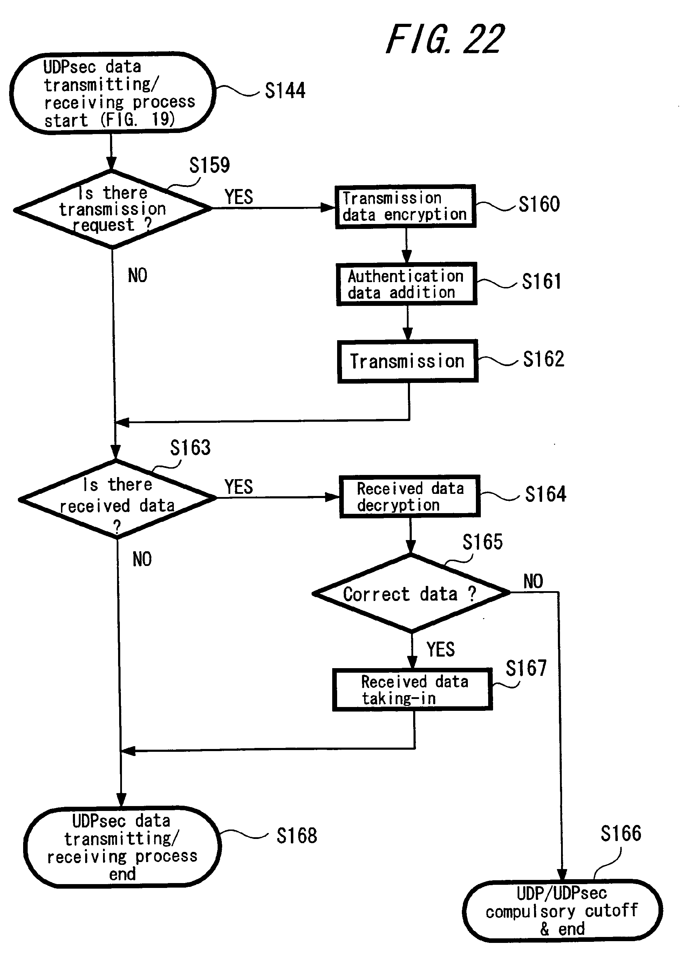

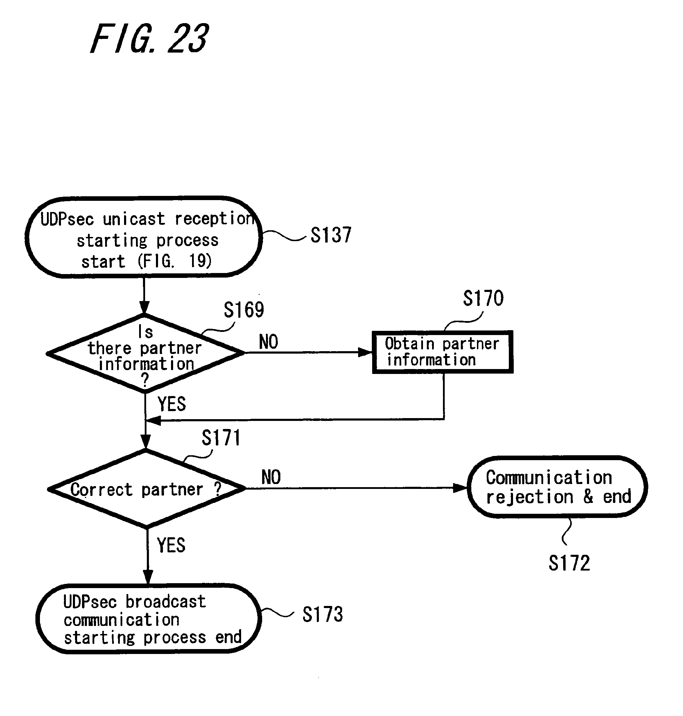

When the host B becomes UDPsec open, a UDPsec open process (see step S125 of FIG. 15 and FIG. 19) starts. In addition, also in a case when the host A becomes UDPsec open, a UDPsec open process starts similarly. Then, it becomes possible to realize a UDPsec data communication.

Also in the unicast communication using UDPsec shown in this FIG. 16B, it is possible similarly as a case of UDP to transmit data from either one of the host A side and the host B side. In case of FIG. 16B, it will be explained assuming that first, there is a transmission request of UDP data from an application of the host A. When the transmission request of UDP data is received from the application, the host B starts a UDPsec unicast reception starting process and starts a negotiation. If the partner is a correct partner as a result of the negotiation, the negotiation is completed and the transmission request of UDP data is transmitted as UDPsec data (cryptograph data) from the application. In this UDPsec unicast communication, there is no return of ACK (acknowledgment) from the data receiving side. Consequently, there is no function of delivery confirmation and data guarantee, but the data communication becomes higher speed correspondingly and it is suitable for a communication of large-capacity video data or the like.

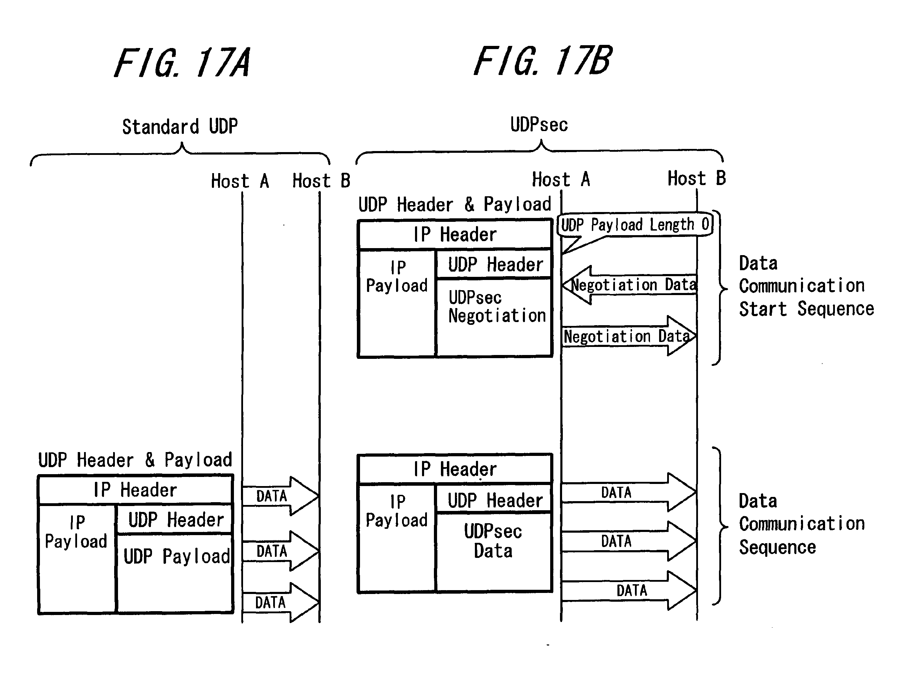

FIGS. 17 is a diagram for explaining a packet (constituted by header and payload) of a start sequence and a data communication sequence of a broadcast communication in standard UDP and in TCP2 using UDPsec which is an encryption system according to the present invention and for explaining a flow thereof.

FIG. 17A is a communication sequence diagram by standard UDP and FIG. 17B is that by TCP2 UDPsec of the present invention.

FIG. 17A is a communication sequence diagram by the standard UDP and FIG. 17B is one by UDPsec of TCP2 according to the present invention. In the standard UDP of FIG. 17A, applications are UDP open both for the host A and the host B. Then, when an application of the host B becomes UDP open, a UDP open process (see step S124 of FIG. 15 and FIG. 18) starts. Also, in a case when an application of the host A becomes UDP open, the UDP open process starts similarly. In this manner, it becomes a condition in which a UDP data communication can be carried out.

Also, both of the host A and the host B can generate data, but FIG. 17A is made to be a diagram in which data flows from the host A side to the host B side in one direction for the reason of a broadcast communication therein. Functions of delivery confirmation and data guarantee are not data are not mounted, because ACK (acknowledgment) is not returned from the received host B side. It should be noted in a case when data are broadcasted that it becomes possible to broadcast data by making sub-net addresses of the IP address to be all "1".

Next, it will be explained with respect to an encryption communication according to UDPsec of FIG. 17B. Also in this case, the applications become UDP open for both of the host A and the host B and TCP2 is open by UDPsec.

When the host B becomes UDPsec open, a UDPsec open process (step S125 of FIG. 15 and FIG. 19) starts. Also, when the host A becomes UDPsec open on the other hand, a UDPsec open process starts similarly. In this manner, it becomes a condition in which UDPsec data communication can be carried out.

It will be explained as shown in FIG. 17B about a case in which there was a transmission request of UDP broadcast data (data which IP address shows a broadcast) from the application of the host A. When the transmission request of UDP broadcast data is received from the application, it is delivered as cryptograph data by UDPsec to unspecific hosts without negotiation. When the host B receives the broadcast data, it starts a UDPsec broadcast receiving start process in step S141 of FIG. 19 to be described hereinafter. A negotiation is started between the host A and the host B and if the partner is a correct partner, the negotiation is completed and the broadcast data are decrypted and transmitted to the application. At this time, there are not functions for performing delivery confirmation and data guarantee, because ACK (acknowledgment) is not returned from the side who received the data.

Next, it will be explained according to FIG. 18 with respect to an open process of standard UDP in step S124 of FIG. 15.

FIG. 18 is a flowchart diagram of a UDP open process and this process is a process which is started in a case when the protocol processed in step S124 of FIG. 15 was determined as UDP.

First, a transmission request or a receiving packet from the application is waited for and when a transmission request or a packet is received, a packet analysis is carried out (step S127) . Here, the reason why not only a receiving packet but also a transmission request are analyzed is because it is prevented to communicate with unspecified numbers of hosts by making the host A as an assailant after a third party having a vicious heart makes the host A to be transmitted as a stepping-stone. After the analysis of this transmitting and receiving packet is carried out, it is judged whether or not it is a correct packet, that is, whether or not it is not a UDP protocol attack pattern in a DoS attack (step S128). In a case when it is judged as an injustice packet in this judging step S128, the packet is abolished (step S129) and a next packet is waited for.

In a case when it is judged as a correct packet in judging step S128, a UDP data transmitting and receiving process is carried out (step S130) and subsequently, it is judged whether or not there is a UDP closing request from a higher rank application (step S131). In a case when there is a UDP closing request from a higher rank application, the UDP open process is ended (step S132).

Next, it will be explained according to FIG. 19 with respect to a UDPsec open process in step S125 of FIG. 15. FIG. 19 a flowchart diagram of a process in the UDPsec open and this process is started as shown in step S125 of FIG. 15 in a case when the protocol to be processed is determined as UDPsec.

First, a transmission request or a receiving packet from the application is waited for and the analysis of the transmission request or the received packet is carried out (step S133). Next, it is judged whether or not the transmission request or transmitting and receiving packet from the higher rank application is a correct UDP packet, that is, whether or not it is not a TCP protocol attack pattern in a DoS attack (step S134). In a case when it is judged as not a correct UDP packet in judging step S134, the packet is abolished (step S135) and a next packet is waited for.

In a case when it is judged as not a correct UDP packet in judging step S134, it is judged next whether or not the receiving packet is one after a UDPsec negotiation (step S136).

Then, in a case when it is judged as a result thereof that it is a negotiation packet of UDPsec, a UDPsec unicast receiving start process shown in FIG. 23 to be described hereinafter is carried out (step S137) and the flow proceeds to step S147.

Also, if it is judged as not a negotiation packet of UDPsec in judging step S136, it is judged subsequently whether or not it is a broadcast communication (step S138). Then, in a case when it is judged as a broadcast communication, it is judged whether or not it is a communication start packet, that is whether or not it is a first communication packet after opened (step S139) and in a case when it is not a start packet, a UDPsec data transmitting and receiving process to be explained in FIG. 22 is carried out (step S144). In a case when it is judged as a communication start packet in judging step S139, it is judged next whether or not it is a transmission packet (step S140). Then, if it is a transmission packet as a result thereof, a UDPsec data transmitting and receiving process mentioned above is carried out (step S144), but in a case when it is judged as not a transmission packet, a UDPsec broadcast receiving start process of FIG. 20 to be described hereinafter is carried out (step S141). It is judged after this receiving start process whether or not the transmitted packet is one from a correct partner (step S142). Then, if it is judged in judging step S142 that the transmitted packet is not one from a correct partner, the packet is abolished (step S143) and a next packet will be waited for. In a case when it is judged as a correct partner in judging step S142, a UDPsec data transmitting and receiving process shown in FIG. 22 is carried out (step S144).

Also, in a case when it is judged as not a broadcast communication in judging step S138, more specifically, that it is a unicast communication, it is judged whether or not it is a communication start packet, more specifically, it is a first communication packet after opened (step S145). In a case when it is judged as a result thereof that it is not a start packet, a UDPsec data transmitting and receiving process describe in detail in FIG. 22 is performed (step S144).

Also, in a case when it is judged in judging step S145 that it is a first communication packet after opened, a UDPsec unicast transmission starting process to be described in FIG. 21 hereinafter is carried out (step S146). Thereafter, it is judged whether or not the communication partner is a correct partner (step S147) and in case of a correct partner, a UDPsec data transmitting and receiving process is performed successively (step S144), and in a case when it is judged as not a correct partner, the received packet is abolished (step S148) and the flow returns to step S133 and a next packet is waited for.

Next, it will be explained according to a flowchart diagram shown in FIG. 20 with respect to a process at a start of UDPsec broadcast receiving in step S141 of FIG. 19.

First, it is judged whether or not the own computer possesses information of a partner who delivered the broadcast (step S149). Then, in a case when the information is not possessed, the partner information is obtained from the install server which was used when the present system was installed (step S150). Alternatively, information is obtained from a server of a third party authentication. This obtaining information utilizes one or a plurality of combinations among TCP2 ID of the partner, user ID, password, biometrics information, apparatus-inherent information, LAN connection apparatus information and the like. Next, it is judged whether or not the partner who delivered the broadcast is a correct partner (step S151). Then, if it is judged as a correct partner, it becomes possible to receive by UDPsec and the communication starting process of the UDPsec broadcast is ended (step S153), and it is instructed to step S142 of FIG. 19 that the reception is possible. In a case when it is judged as not a correct partner in judging step S151, a communication rejection is carried out (step S152) and it is instructed also to step S142 of FIG. 19 that the data are not to be obtained. It should be noted that even if there is obtained information relating to the partner in step S149 at all, it is better to carry out an obtaining operation of the partner information in step S150 anew in a case when it goes beyond the term of validity or the number of times of effective uses.

Next, it will be explained according to a flowchart diagram shown in FIG. 21 with respect to a UDPsec unicast transmission starting process in step S146 of FIG. 19.

First, it is confirmed whether or not the own computer possesses information of the transmission partner (step S154). Then, in a case when the information is not possessed, the partner information is obtained by a method similar to step S150 of FIG. 20 (step S155). This obtaining information is same as the case of FIG. 20.

Next, it is judged whether or not the transmission partner is a correct partner (step S156). Then, if it is judged as a correct partner, transmission by UDPsec comes to be possible and the UDPsec unicast communication starting process is ended (step S158), and it is instructed to step S147 of FIG. 19 that transmission is possible. In a case when it is judged as not a correct partner in judging step S156, a communication rejection is carried out (step S157) and it is instructed to step S147 of FIG. 19 that data will not be obtained.

Next, it will be explained according to FIG. 22 with respect to a UDPsec data transmitting and receiving process shown in step S144 of FIG. 19.

First, it is judged whether or not there was a transmission request from the application of the host A (step S159). If there is a transmission request, the data are encrypted in the transmission side host A (step S160), authentication data are added to the encrypted data (step S161), and the packet encrypted and added with the authentication data is transmitted to the reception side host B (step S162).

Next, it is judged in the reception side host B whether or not there are received data (step S163) and in a case when there are received data, decryption of the received data is carried out (step S164). Next, it is judged whether or not the received and decrypted data are correct data (step S165). This judgment is carried out by confirming the decrypted data and the received authentication data and in a case when it is judged as not correct data as a result of confirming the decoded data, UDP/UDPsec is cutoff compulsorily (step S166). In a case when it is judged in judging step S165 that the decrypted data are correct data, taking-in of the received data, more specifically, data delivery to the higher rank protocol stacks is carried out (step S167) and the UDPsec data transmitting and receiving process is completed (step S168).

Next, it will be explained according to a flowchart diagram of FIG. 23 with respect to a UDPsec unicast reception starting process shown in step S137 of FIG. 19.

First, it is judged whether or not the own computer possesses the partner information of the packet received by unicast (step S169). In a case when the partner information is not possessed, the partner information is obtained from the install server used when the present system was installed or from the server authenticated by the third party (step S170). As for the obtaining information, it is same as in a case of step S150 of FIG. 20 or step S155 of FIG. 21 and it corresponds to one or a plurality of TCP2 ID on the partner side, user ID, password, biometrics information, apparatus-inherent information, LAN connecting apparatus information and the like.

Next, it is judged whether or not the partner transmitted by unicast is a correct partner (step S171). If it is judged as a correct partner, it is delivered to step S147 of FIG. 19 that the reception by UDPsec is possible and the UDPsec broadcast communication starting process is ended (step S173). In a case when it is judged as not a correct partner in judging step S171, it is delivered to step S147 of FIG. 19 that data will not be obtained and the communication is rejected (step S172).

As mentioned above, it was explained in detail according to flowchart diagrams and sequence diagrams with respect to an encryption process using TCPsec which is a first exemplified embodiment according to the present invention and an encryption process using UDPsec which is a second exemplified embodiment of according to the present invention.

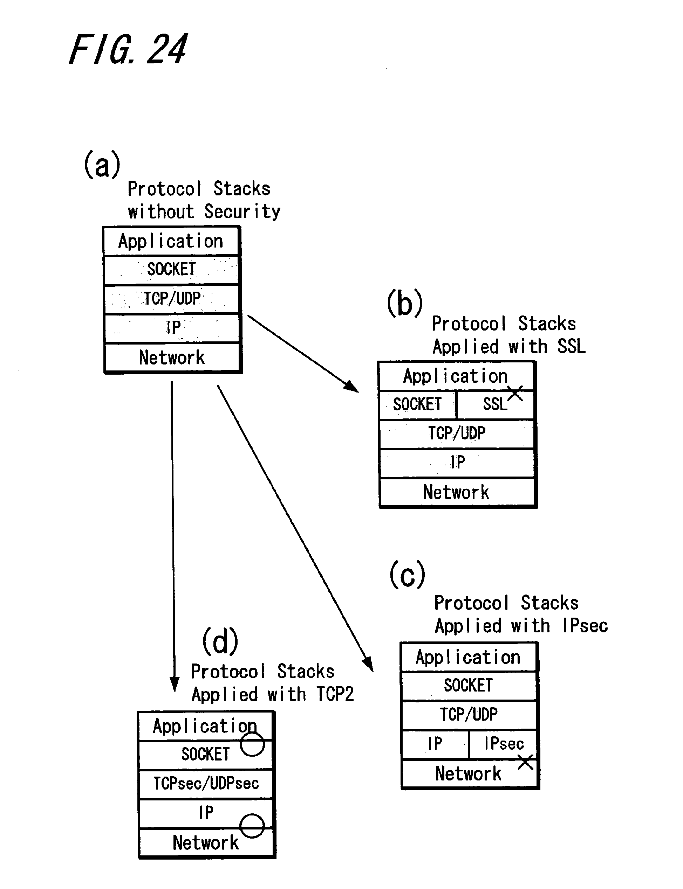

Next, it will be explained according to table 2 and FIG. 24 with respect to a matter how superior TCP2 of the present invention compared with conventional IPsec or SSL.

Table 2 is a table to be shown by adding TCP2 function to a comparison table of IPsec and SSL functions according to table 1.

As being clear from this table 2, it can be understood that several problems which IPsec and SSL possess (these were shown in BACKGROUND ART) are solved from stem to stern by employing TCP2.

**Table 2: Function Comparison of IPsec, SSL and TCP2**

| | | IPsec | | SSL | | TCP2 | |
|---|---|---|---|---|---|---|---|
| (1) | Communication between Client-Client | ○ | Direct communication | × | Direct communication is unavailable. Communication is available through a special server. | ○ | Direct communication is available. |
| (2) | PPP Mobile Environment | □ | It is possible by utilizing XAUTH. However, there is a problem of security. | ○ | Communication is available. | ○ | Direct communication is available. is available. |
| (3) | ADSL Environment | | | | | | |
| (4) | NAT, IP Masquerade Environment | □ | It can be realized by being commonly used with NAT-T. | ○ | Communication is Communication is available. | ○ | Communication Communication is available. |
| (5) | DoS Attack to TCP/IP Protocol Stack | ○ | It is possible to have correspondence with DoS attack. | × | Correspondence is unavailable. | ○ | It is have possible correspondence with DoS attack. |
| (6) | Under Bad Communication Environment (Environment where Communication Errors often Occur Caused by Many Physical Noises) | × | Correspondence is inadequate. Lowering of throughput is incurred. | ○ | Correspondence is available. | ○ | Correspondence is available. |
| (7) | Communication between Different LANs | □ | Communication is unavailable when the subnet address is the same address. | ○ | Communication is available. | ○ | Communication is available. |
| (8) | Different Network Environment | □ | Management is hard and difficult. | ○ | Management can be simplified. | ○ | Management can be simplified. |
| (9) | Connection through a plurality of Carriers | × | Communication is unavailable. | ○ | Communication is available. | ○ | Communication is available. |
| (10) | Secure Communication of All UDP Ports of | ○ | Secure Communication is available. | × × | Communication is unavailable. | ○ ○ | Communication is available. |
| (11) | Secure Communication of All TCP Ports | ○ | Secure Communication Secure Communication is available. | × | Communication is unavailable except a specific TCP port. | ○ | Communication Communication is available |
| (12) | Limitation in Application | ○ | Not affected. | × | It is necessary to change the socket program. | ○ | It is possible to use socket program portion as it is. |
| (13) | Access Unit | | IP Unit | | Resource Unit (URL Unit, Folder Unit) | | PORT Unit, Session Unit |
| (14) | MTU (Maximum Segment Size) | □ | Adjustment is necessary. | ○ ○ | Communication is Available without being Conscious of MTU. | ○ ○ | Communication is available without consciousness. |
| (15) | Internet Telephone Using VoIP under Mobile Environment | □ | It is possible by utilizing XAUTH. However, there is a problem of security. | × | It cannot be used. | o | It can be used. |
| (16) | Internet Telephone Using VoIP under ADSL Environment | □ | It is possible by utilizing XAUTH. However, there is a problem of security. | × | It cannot be used. | ○ | It can be used. |

For example, TCP2 completely has correspondence with communication between client-client, DoS attacks to TCP/IP protocols, secure communication of all UDP ports or TCP ports, limitation in applications for which socket programs should be changed so far and the like, which were difficult for SSL to have correspondence therewith.

In addition, TCP2 completely supports also with respect to a communication under an inferior environment where errors occur frequently, a communication between different LANs, a connection by way of a plurality of carriers, a PPP mobile environment and a communication under ADSL Environment which were difficult for IPsec to have correspondence therewith.

Further, with respect to the internet using VoIP (Voice over Internet Protocol) under mobile environment or ADSL Environment, there is problems both in IPsec and SSL as shown in table 1 and table 2, but it is possible according to TCP2 of the present invention to have correspondence therewith under either one of the environments.

Further, also with respect to internet telephone using VoIP between different LANs or between LANs over-striding a plurality of carriers, it is possible according to TCP2 of the present invention to have correspondence therewith completely while it was impossible for IPsec and SSL to have correspondence therewith.

FIG. 24 is a diagram for explaining superiority of TCP2 shows a case (b), a case (c) and a case (□) by comparison when a conventional SSL, IPsec and TCP2 (TCPsec/UDPsec) of the present invention are respectively applied to protocol stacks without security (a). SSL shown in a case (b) of FIG. 24, as already described, has no compatibility with respect to an upper application, because it is provided in a socket of the session layer (fifth layer). Consequently, SSL itself is to have a problem as mentioned above. Also, IPsec shown in a case (c) of FIG. 24 is positioned in the network layer (third layer) and has no compatibility in the IP layer, so that it is to receive several restrictions for constituting a network as mentioned above. On the other hand, TCP2 (TCPsec/UDPsec) shown in a case (d) of FIG. 24 is an encryption technology to be introduced in the transport layer (fourth layer) and therefore it is possible to utilize a socket directly when seen from the application and further to utilize also an IP directly when seen from the network, so that it does not receive any restriction for constituting a network.

As described above, it can be said that the encryption communication system or the encryption communication method using TCP2 according to the present invention has an extremely high security function particularly with respect to data leakage, falsification, camouflage and approach then attack also when compared with existing encryption process system.

Here, it is needless to say that the present invention is not restricted by the exemplified embodiments as explained above and a lot of further exemplified embodiments are to be included in a region of the present invention described in the claims without departing from its scope.

### DESCRIPTION OF REFERENCE NUMERALS

- 1: host computer,
- 2: network control apparatus (router)
- 3a, 3b and 3c: client terminal
- 4a, 4b and 4c: client terminal
- 11: NIC driver
- 12: ARP or ARP on CP
- 13: IP emulator
- 13b: IPsec on CP
- 15: TCP emulator
- 15b: TCPsec on CP
- 16: UDP emulator
- 16b: UDPsec on CP
- 17: socket (Socket)
- 41: IP header
- 42: ESP header
- 43: TCP header
- 44: TCPsec additional information
- 45: data (payload)
- 46: TCPsec added trailer
- 47: TCPsec added authentication data
- 48: ESP trailer
- 49: ESP authentication data

## Claims

1. A communication system which carries out a communication by encrypting a protocol positioned in a transport layer comprising:
arrangement means for arranging encryption and decryption logic which have correspondence therewith for both ends of a communication path;
protocol encryption means for encrypting and transmitting at least a payload of said protocol in a packet as an information unit to be transmitted and received according to an encryption logic arranged by said arrangement means; and
protocol decryption means for decrypting said encrypted protocol payload to be received according to a decryption logic arranged by said arrangement means;
wherein a communication based on said encryption and decryption logic is carried out by using the protocol of said transport layer.

2. A communication system in which first and second communication apparatuses equipped with arrangement means for arranging encryption and decryption logic used for a communication system which carries out a communication by encrypting a protocol positioned in a transport layer and a third communication apparatus not equipped with arrangement means for arranging said encryption and decryption logic are connected to a network respectively, wherein
said first and second communication apparatuses are equipped with protocol encryption means for encrypting and transmitting at least a payload of said protocol in a packet of an information unit to be transmitted and received according to an encryption logic arranged by said arrangement means and both of encryption protocol processing means consisting of protocol decryption means for decrypting said encrypted protocol payload to be received according to a decryption logic arranged by said arrangement means and ordinary protocol processing means without being accompanied by said encryption and decryption logic,
said third communication apparatus is equipped with only an ordinary protocol processing means without arrangement means for arranging said encryption and decryption logic,
when said first communication apparatus communicates with said second communication apparatus, said encryption protocol means is selected by the arrangement means of said encryption and decryption logic so as to communicate by said encryption protocol means and at the same time, and
when said first communication apparatus communicates with said third communication apparatus, said ordinary protocol processing means without being accompanied by said encryption and decryption is selected by the arrangement means of said encryption and decryption logic so as to carry out a communicate with said third communication apparatus by said ordinary protocol processing means.

3. A communication system in which first and second communication apparatuses equipped with arrangement means for arranging encryption and decryption logic used for a communication system which communicates by encrypting a protocol positioned in a transport layer and third communication apparatus not equipped with arrangement means for arranging said encryption and decryption logic are connected to a network respectively, wherein
said first and second communication apparatuses are equipped with protocol encryption means for encrypting and transmitting at least a payload of said protocol in a packet of an information unit to be transmitted and received according to an encryption logic arranged by said arrangement means and both of encryption protocol processing means consisting of protocol decryption means for decrypting said encrypted protocol payload to be received according to a decryption logic arranged by said arrangement means and ordinary protocol processing means without being accompanied by said encryption and decryption logic,
said third communication apparatus is equipped with only an ordinary protocol processing means without arrangement means for arranging said encryption and decryption logic,
when said first communication apparatus communicates with said second communication apparatus, said encryption protocol means is selected by the arrangement means of said encryption and decryption logic so as to communicate by said encryption protocol means and at the same time, and
when said first communication apparatus communicates with said third communication apparatus, it is determined not to carry out the communication with said third communication apparatus by the arrangement means of said encryption and decryption logic so as not to carry out a communication with said third communication apparatus.

4. A communication system according to either one of claims 1 to 3,
wherein the protocol positioned in said transport layer is TCP or UDP and said TCP or UDP is applied with a process for encryption and decryption.

5. A communication system according to either one of claims 1 to 4,
wherein an encryption and decryption logic which can be a candidate to be arranged by said arrangement means of the encryption and decryption logic is stored in a memory or mounted on a circuit, further comprising logic changing means for periodically changing said stored or mounted encryption and decryption logic which can be a candidate to be arranged.

6. A communication system according to either one of claims 1 to 5,
wherein it can be arranged in connection with said encryption and decryption logic such that said arrangement means of the encryption and decryption logic handles a plaintext without encryption.

7. A communication system which communicates by encrypting a protocol corresponding to TCP or UDP positioned in a transport layer comprising:
completeness authentication arrangement means for arranging a completeness authentication logic which has correspondence therewith for both ends of a communication path;
protocol completeness authentication information addition means for transmitting at least a payload of said protocol corresponding to the TCP or UDP in a packet as an information unit to be transmitted and received by adding completeness authentication information according to a completeness authentication logic arranged by said completeness authentication arrangement means; and protocol completeness authentication means for completeness-authenticating the received protocol added with said completeness authentication information according to a completeness authentication logic arranged by said completeness authentication arrangement means,
wherein a communication based on said completeness authentication logic is carried out by using the TCP or UDP protocol existing in said transport layer.

8. A communication system in which first and second communication apparatuses equipped with completeness authentication arrangement means for carrying out arrangement of completeness authentication by using TCP or UDP of a transport layer and a third communication apparatus not equipped with said completeness authentication arrangement means are connected to a network respectively, wherein
said first and second communication apparatuses are equipped with both of completeness authentication protocol processing means for processing TCP or UDP by adding said completeness authentication information and ordinary protocol processing means for processing ordinary TCP or UDP without performing an addition of said completeness authentication information,
said third communication apparatus is equipped with only an ordinary protocol processing means without being accompanied by said completeness authentication,
when said first communication apparatus communicates with said second communication apparatus, a communication is carried out by completeness authentication protocol processing means by being added with said completeness authentication information by means of said completeness authentication arrangement means and at the same time, when said first communication apparatus communicates with said third communication apparatus, it is determined not to add said completeness authentication information and a communication is carried out by said ordinary protocol processing means.

9. A communication system in which first and second communication apparatuses equipped with completeness authentication arrangement means for carrying out arrangement of completeness authentication by using TCP or UDP of a transport layer and a third communication apparatus not equipped with said completeness authentication arrangement means are connected to a network respectively, wherein
said first and second communication apparatuses are equipped with both of completeness authentication protocol processing means for processing TCP or UDP by adding said completeness authentication information and ordinary protocol processing means for processing ordinary TCP or UDP without performing an addition of said completeness authentication information,
said third communication apparatus is equipped with only an ordinary protocol processing means without being accompanied by said completeness authentication, and
when said first communication apparatus communicates with said second communication apparatus, a communication is carried out by completeness authentication protocol means for adding said completeness authentication information by means of said completeness authentication arrangement means and at the same time, when said first communication apparatus communicates with said third communication apparatus, it is determined not to carry out a communication by said completeness authentication arrangement means.

10. A communication system according to either one of claims 7 to 9, wherein a completeness authentication logic which can be a candidate to be arranged by said completeness authentication arrangement means is stored in a memory or mounted on a circuit, further comprising completeness authentication logic changing means for periodically changing said stored or mounted completeness authentication logic.

11. A communication system according to either one of claims 7 to 10, wherein said arrangement by said completeness authentication arrangement means is one to arrange such that said completeness authentication information is to be added to a transmission data or said completeness authentication information is not to be added thereto.

12. A communication apparatus which carries out a communication by encrypting a protocol positioned in a transport layer comprising:
arrangement means for arranging encryption and decryption logic for a communication;
protocol encryption means for encrypting and transmitting at least a payload of said protocol in a packet as an information unit to be transmitted according to an encryption logic arranged by said arrangement means; and
both of encryption protocol processing means consisting of protocol decryption means for decrypting said encrypted protocol payload to be received according to a decryption logic arranged by said arrangement means and ordinary protocol processing means for processing ordinary protocol without being accompanied by said encryption and decryption,
wherein it becomes possible to select said encryption protocol processing means or said ordinary protocol processing means according to a communication partner by means of said arrangement means of the encryption and decryption logic.

13. A communication apparatus which carries out a communication by encrypting a protocol positioned in a transport layer comprising:
completeness authentication arrangement means for arranging a completeness authentication logic for a communication;
protocol completeness authentication information addition means for transmitting at least a payload of a protocol corresponding to said TCP or UDP in a packet which is an information unit to be transmitted and received by adding completeness authentication information according to a completeness authentication logic arranged by said completeness authentication arrangement means; and
protocol completeness authentication means for completeness-authenticating the received protocol added with said completeness authentication information according to a completeness authentication logic arranged by said completeness authentication arrangement means,
wherein a communication based on said completeness authentication logic is carried out by using the TCP or UDP protocol existing in said transport layer.

14. A communication method which communicates by encrypting a protocol corresponding to TCP or UDP of a transport layer comprising:
arrangement step for arranging an encryption and decryption logic which has correspondence therewith for both ends of a communication path beforehand or dynamically;
protocol encryption step for transmitting at least a protocol corresponding to the payload of said TCP or UDP in a packet which becomes an information unit to be transmitted and received by encrypting according to an encryption logic arranged by said arrangement step; and
protocol decryption step for decrypting the received encrypted protocol according to a decryption logic arranged by said arrangement step,
wherein a communication is carried out by applying an encryption process to the protocol corresponding to the TCP or UDP of said transport layer.

15. A communication method in which first and second communication apparatuses equipped with arrangement means for arranging an encryption and decryption logic used for a communication method communicating a protocol corresponding to TCP or UDP of a transport layer by encryption and a third communication apparatus not equipped with arrangement means for arranging said encryption and decryption logic are connected to a network respectively, wherein
when a communication is carried out from said first communication apparatus to said second communication apparatus, a communication is carried out by encrypting the payload of the protocol corresponding to said TCP or UDP according to an encryption logic arranged by said arrangement means,
when said first communication apparatus communicates with said third communication apparatus, it is determined not to transmit the payload of said TCP or UDP protocol by encryption according to the encryption logic arranged by said arrangement means so as to communicate by an ordinarily TCP or UDP protocol which is not accompanied by said encryption logic.

16. A communication method in which first and second communication apparatuses equipped with arrangement means for arranging an encryption and decryption logic used for a communication method communicating by encrypting a protocol corresponding to TCP or UDP of a transport layer and a third communication apparatus not equipped with arrangement means for arranging said encryption and decryption logic are connected to a network respectively, wherein
when said first communication apparatus communicates with said second communication apparatus, a communication is carried out by encrypting the payload of the protocol corresponding to said TCP or UDP according to an encryption logic arranged by said arrangement means and at the same time,
when said first communication apparatus communicates with said third communication apparatus, it is determined not to carry out a communication by said arrangement step so as not to carry out a communication with said third communication apparatus.

17. A communication method according to either one of claims 14 to 16, wherein an encryption and decryption logic which can be a candidate to be arranged in said arrangement step is stored in a memory or a circuit and the content of said storing encryption and decryption logic is changed periodically.

18. A communication method according to either one of claims 14 to 17, wherein it can arrange with respect to the encryption and decryption logic such that a plaintext is handled without encryption in said arrangement step.

19. A communication method according to either one of claims 14 to 18 further comprising a step for authenticating a communication partner before said arrangement step.

20. A communication method which communicates by encrypting a protocol corresponding to TCP or UDP existing in a transport layer comprising:
completeness authentication arrangement step for arranging a completeness authentication logic which has correspondence therewith for both ends of a communication path beforehand;
protocol completeness authentication information addition step for transmitting at least a protocol corresponding to the payload of said TCP or UDP in a packet of an information unit to be transmitted and received by adding completeness authentication information according to a completeness authentication logic arranged by said completeness authentication arrangement step; and
protocol completeness authentication step for completeness-authenticating the received protocol added with said completeness authentication information according to a completeness authentication logic arranged by said completeness authentication arrangement step,
wherein a communication is carried out by adding said completeness authentication information to said TCP or UDP protocol existing in said transport layer.

21. A communication method in which a communication is carried out through a network between first and second communication apparatuses equipped with completeness authentication arrangement means for carrying out arrangement of completeness authentication by using TCP or UDP of a transport layer or between the first or second communication apparatus equipped with said completeness authentication arrangement means and a third communication apparatus not equipped with said completeness authentication arrangement means, wherein
when said first communication apparatus equipped with the completeness authentication protocol communicates with said second communication apparatus similarly equipped with the completeness authentication protocol, transmission is done by carrying out completeness authentication protocol process processing TCP or UDP added with said completeness authentication information by means of said completeness authentication arrangement means, and
when said first or second communication apparatus equipped with said completeness authentication protocol communicates with said third communication apparatus not equipped with said completeness authentication protocol, it is determined by said completeness authentication arrangement means not to add said completeness authentication information and a communication is carried out by carrying our said ordinary protocol processing means processing the ordinary TCP or UDP.

22. A communication method in which a communication is carried out through a network between first and second communication apparatuses equipped with completeness authentication arrangement means for carrying out arrangement of completeness authentication by using TCP or UDP of a transport layer or between the first or second communication apparatus equipped with said completeness authentication arrangement means and a third communication apparatus not equipped with said completeness authentication arrangement means, wherein
when said first communication apparatus equipped with the completeness authentication protocol communicates with said second communication apparatus similarly equipped with said completeness authentication protocol, communication is done by carrying out completeness authentication protocol process for adding said completeness authentication information by means of said completeness authentication arrangement means and at the same time, when said first or second communication apparatus communicates with said third communication apparatus, communication is not carried out without said completeness authentication arrangement.

23. A communication method according to either one of claims 20 to 22 further comprising a step in said completeness authentication arrangement step for storing a completeness authentication logic for adding completeness authentication information which can be a candidate to be arranged in a memory or for mounting it on a circuit; and completeness authentication logic changing step for changing said stored or mounted content periodically.

24. A communication method according to either one of claims 20 to 23, wherein arrangement such that the completeness authentication information is not to be added can be determined in said completeness authentication arrangement step by the completeness authentication logic for adding the completeness authentication information.

25. A communication method according to either one of claims 20 to 24 further comprising a step for authenticating a communication partner before said completeness authentication arrangement step.

26. In a program realizing a communication system which carries out a communication by encrypting a protocol positioned in a transport layer, a communication program comprising:
arrangement function for arranging encryption and decryption logic which have correspondence therewith for both ends of a communication path;
protocol encryption function for transmitting at least a payload of said protocol in a packet of an information unit to be transmitted and received according to an encryption logic arranged by said arrangement means; and
protocol decryption function for decrypting said encrypted protocol payload to be received according to a decryption logic arranged by said arrangement,
wherein a communication function applied with said encryption and decryption logic by using the protocol of said transport layer is realized.

27. In a computer program realizing a communication system which communicates by encrypting a protocol corresponding to TCP or UDP positioned in a transport layer, a communication program comprising:
completeness authentication arrangement function for arranging a completeness authentication logic which has correspondence therewith for both ends of a communication path;
protocol completeness authentication information adding function for transmitting at least a payload of the protocol corresponding to said TCP or UDP in a packet as an information unit to be transmitted and received by adding completeness authentication information according to a completeness authentication logic arranged by said completeness authentication arrangement; and
protocol completeness authentication function for completeness-authenticating the received protocol added with said completeness authentication information according to a completeness authentication logic arranged by said completeness authentication arrangement,
wherein a communication function applied with said completeness authentication logic by using the TCP or UDP protocol existing in said transport layer is realized.

## Amended claims

### Amended claims under Art. 19.1 PCT

**1.** amended). A communication system which carries out a communication by adding encrypting function to a TCP or UDP protocol positioned in a transport layer comprising:
connection sequence means for carrying out a connection with a communication partner after judging whether or not the communication partner is a communication partner who possess right authority;
arrangement means for arranging encryption and decryption logic which have correspondence therewith for both ends of a communication path;
protocol encryption means for encrypting and transmitting at least a payload of said TCP or UDP protocol in a packet as an information unit to be transmitted and received according to an encryption logic arranged by said arrangement means; and
protocol decryption means for decrypting said encrypted protocol payload to be received according to a decryption logic arranged by said arrangement means;
Wherein said arrangement means carries out a communication based on said encryption and decryption logic by using said TCP or UDP protocol of said transport layer only with the communication partner who was connected after said connection sequence means judged that he possess right authority.

**2.** amended). A communication system in which arrangement means for arranging encryption and decryption logic used for a communication system which carries out a communication by adding encrypting function to a TCP or UDP protocol positioned in a transport layer, first and second communication apparatuses equipped with connection sequence means for carrying out a connection with a communication partner after judging whether or not said communication partner is a communication partner who possesses right authority and a third communication apparatus not equipped with arrangement means for arranging said encryption and decryption logic are connected to a network respectively,
wherein said first and second communication apparatuses are equipped with protocol encryption means for encrypting and transmitting at least a payload of said TCP or UDP protocol in a packet of an information unit to be transmitted and received according to an encryption logic arranged by said arrangement means and both of encryption protocol processing means consisting of protocol decryption means for decrypting said encrypted protocol payload to be received according to a decryption logic arranged by said arrangement means and ordinary protocol processing means without being accompanied by said encryption and decryption logic,
said third communication apparatus is equipped with only an ordinary protocol processing means without arrangement means for arranging said encryption and decryption logic of said TCP or UDP protocol,
when said first communication apparatus communicates with said second communication apparatus, said encryption protocol means is selected by the arrangement means of said encryption and decryption logic according to judgment information of said connection sequence means so as to communicate by said encryption protocol means and at the same time
when said first communication apparatus communicates with said third communication apparatus, it becomes possible according to the judgment information of said connection sequence means to select either one of a situation in which communication is carried out by said ordinary protocol processing means without being accompanied by said encryption and decryption selected by the arrangement means of said encryption and decryption logic and a situation in which communication with said third communication is not carried out .

**3.** deleted).

**4.** deleted).

**5.** maintained). A communication system according to either one of claims 1 to 4, wherein an encryption and decryption logic which can be a candidate to be arranged by said arrangement means of the encryption and decryption logic is stored in a memory or mounted on a circuit, further comprising logic changing means for periodically changing said stored or mounted encryption AND decryption logic which can be a candidate to be arranged.

**6.** maintained). A communication system according to either one of claims 1 to 5, wherein it can be arranged in connection with said encryption and decryption logic such that said arrangement means of the encryption and decryption logic handles a plaintext without encryption.

**7.** amended). A communication system which carries out a communication by adding authentication function to a TCP or UDP protocol positioned in a transport layer comprising:
connection sequence means for carrying out a connection with a communication partner after judging whether or not the communication partner is a communication partner who possess right authority;
completeness authentication arrangement means for arranging a completeness authentication logic which has correspondence therewith for both ends of a communication path;
protocol completeness authentication information addition means
for transmitting at least a payload of said protocol corresponding to the TCP or UDP in a packet as an information unit to be transmitted and received by adding completeness authentication information according to a completeness authentication logic arranged by said completeness authentication arrangement means; and
protocol completeness authentication means for completeness-authenticating the received protocol added with said completeness authentication information according to a completeness authentication logic arranged by said completeness authentication arrangement means,
wherein a communication based on said completeness authentication logic is carried out by using the TCP or UDP protocol existing in said transport layer only with the communication partner who was judged to possess right authority by said connection sequence means.

**8.** amended). A communication system in which connection sequence means for carrying out a connection with a communication partner after judging by using TCP or UDP positioned in a transport layer whether or not the communication partner is a communication partner who possess right authority; first and second communication apparatuses equipped with completeness authentication arrangement means for carrying out arrangement of completeness authentication by using said TCP or UDP and a third communication apparatus not equipped with said completeness authentication arrangement means are connected to a network respectively,
wherein said first and second communication apparatuses are equipped with both of completeness authentication protocol processing means for processing TCP or UDP by adding said completeness authentication information and ordinary protocol processing means for processing ordinary TCP or UDP without performing an addition of said completeness authentication information,
said third communication apparatus is equipped with only an ordinary protocol processing means without being accompanied by said completeness authentication,
when said first communication apparatus communicates with said second communication apparatus, the connection with said the second communication apparatus is performed after confirming in said connection sequence means that the communication partner of said the second communication apparatus is a right partner and a communication is carried out by completeness authentication protocol processing means by being added with said completeness authentication information, and at the same time
when said first communication apparatus communicates with said third communication apparatus, it is determined according to the judgment information in said connection sequence means not to add said completeness authentication information, it becomes possible according to the judgment information of said connection sequence means to select either one of a situation in which communication with the third communication apparatus is carried out by said ordinary protocol processing means and a situation in which communication with said third communication is not carried out or in which connection for communication is not carried out after confirming by said completeness authentication arrangement means that the communication partner of said third communication apparatus is not a communication partner who possesses right authority.

**9.** deleted).

**10.** maintained). A communication system according to either one of claims 7 to 9, wherein a completeness authentication logic which can be a candidate to be arranged by said completeness authentication arrangement means is stored in a memory or mounted on a circuit, further comprising completeness authentication logic changing means for periodically changing said stored or mounted completeness authentication logic.

**11.** maintained). A communication system according to either one of claims 7 to 10, wherein said arrangement by said completeness authentication arrangement means is one to arrange such that said completeness authentication information is to be added to a transmission data or said completeness authentication information is not to be added thereto.

**12.** amended). A communication system which carries out a communication by adding encrypting function to a TCP or UDP protocol positioned in a transport layer comprising:
connection sequence means for carrying out a connection by using said TCP or UDP protocol with a communication partner after judging whether or not the communication partner is a communication partner who possess right authority;
arrangement means for arranging encryption and decryption logic for a communication;
protocol encryption means for encrypting and transmitting at least a payload of said TCP or UDP protocol in a packet as an information unit to be transmitted according to an encryption logic arranged by said arrangement means; and
both of encryption protocol processing means consisting of protocol decryption means for decrypting said encrypted protocol payload to be received according to a decryption logic arranged by said arrangement means and ordinary protocol processing means for processing ordinary protocol without being accompanied by said encryption and decryption,
wherein said arrangement means of the encryption and decryption logic carries out a communication by using said encryption protocol processing means in a case when said connection sequence means confirmed that the communication partner is a communication partner possessing right authority and in a case when it was confirmed that said communication partner is a communication partner who does not possess right authority, communication is carried out it becomes possible to select a situation in which a communication is carried out by using said ordinary protocol processing means or a situation in which a communication is not carried out.

**13.** amended). A communication system which carries out a communication by adding authentication function to a TCP or UDP protocol positioned in a transport layer comprising:
connection sequence means for carrying out a connection by using said TCP or UDP protocol with a communication partner after judging whether or not the communication partner is a communication partner who possess right authority;
completeness authentication arrangement means for arranging a completeness authentication logic for a communication;
protocol completeness authentication information addition means for transmitting at least a payload of a protocol corresponding to said TCP or UDP in a packet which is an information unit to be transmitted and received by adding completeness authentication information according to a completeness authentication logic arranged by said completeness authentication arrangement means; and
protocol completeness authentication means for completeness-authenticating the received protocol added with said completeness authentication information according to a completeness authentication logic arranged by said completeness authentication arrangement means,
wherein a communication based on said completeness authentication logic is carried out according to the judgment information of said connection sequence means by using the TCP or UDP protocol existing in said transport layer.

**14.** amended). A communication method which communicates by encrypting function to a protocol corresponding to TCP or UDP of a transport layer comprising:
connection step for carrying out a connection by using said TCP or UDP protocol with a communication partner after judging whether or not the communication partner is a communication partner who possess right authority;
arrangement step for arranging an encryption and decryption logic which has correspondence therewith for both ends of a communication path beforehand or dynamically;
protocol encryption step for transmitting at least a protocol corresponding to the payload of said TCP or UDP in a packet which becomes an information unit to be transmitted and received by encrypting according to an encryption logic arranged by said arrangement step; and
protocol decryption step for decrypting the received encrypted protocol according to a decryption logic arranged by said arrangement step,
wherein in a case when it is judged in said connection step that the communication partner possesses right authority, a communication is carried out by applying an encryption process to the protocol corresponding to the TCP or UDP of said transport layer.

**15.** A communication method in which first and second communication apparatuses equipped with arrangement means for arranging an encryption and decryption logic used for a communication method communicating a protocol corresponding to TCP or UDP of a transport layer by adding encryption function and connection sequence means for carrying out a connection with a communication partner after judging whether or not the communication partner is a communication partner who possess right authority and a third communication apparatus not equipped with arrangement means for arranging said encryption and decryption logic are connected to a network respectively,
wherein when a communication is carried out from said first communication apparatus to said second communication apparatus, a communication is carried out according to the judgment information of said connection sequence means by encrypting the payload of the protocol corresponding to said TCP or UDP according to an encryption logic arranged by said arrangement means and at the same time,
when said first communication apparatus communicates with said third communication apparatus, it is determined according to the judgment information of said connection sequence means not to transmit the payload of said TCP or UDP protocol by encryption according to the encryption logic arranged by said arrangement means and a communication is carried out by selecting either one of a situation in which a communication is carried out by an ordinarily TCP or UDP protocol which is not accompanied by said encryption logic and a situation in which a communication with said the third communication apparatus is carried out.

**16.** deleted).

**17.** maintained). A communication method according to either one of claims 14 to 16, wherein an encryption and decryption logic which can be a candidate to be arranged in said arrangement step is stored in a memory or a circuit and the content of said storing encryption and decryption logic is changed periodically.

**18.** maintained). A communication method according to either one of claims 14 to 17, wherein it can arrange with respect to the encryption and decryption logic such that a plaintext is handled without encryption in said arrangement step.

**19.** maintained). A communication method according to either one of claims 14 to 18 further comprising a step for authenticating a communication partner before said arrangement step.

**20.** amended). A communication method which communicates by adding authentication function to encrypting a TCP or UDP protocol existing in a transport layer comprising:
connection step for carrying out a connection with a communication partner after judging by using said TCP or UDP protocol whether or not the communication partner is a communication partner who possess right authority;
completeness authentication arrangement step for arranging a completeness authentication logic which has correspondence therewith for both ends of a communication path beforehand;
protocol completeness authentication information addition step for transmitting at least a protocol corresponding to the payload of said TCP or UDP in a packet of an information unit to be transmitted and received by adding completeness authentication information according to a completeness authentication logic arranged by said completeness authentication arrangement step; and
protocol completeness authentication step for completeness-authenticating the received protocol added with said completeness authentication information according to a completeness authentication logic arranged by said completeness authentication arrangement step,
wherein in a case when it is judged in said connection step that the communication partner possesses right authority, a communication is carried out by adding said completeness authentication information to said TCP or UDP protocol existing in said transport layer.

**21.** amended). A communication method in which a communication is carried out through a network between first and second communication apparatuses equipped with connection sequence means for carrying out a connection with a communication partner after it is judged by using TCP or UDP of a transport layer whether or not the communication partner is a communication partner possessing right authority and completeness authentication arrangement means for carrying out arrangement of completeness authentication by using said TCP or UDP or between the first or second communication apparatus equipped with said completeness authentication arrangement means and a third communication apparatus not equipped with said completeness authentication arrangement means,
wherein when said first communication apparatus equipped with the completeness authentication protocol communicates with said second communication apparatus similarly equipped with the completeness authentication protocol, transmission is done by carrying out completeness authentication protocol process processing TCP or UDP added with said completeness authentication information by means of said completeness authentication arrangement means according to judgment information of said connection sequence means, and
when said first or second communication apparatus equipped with said completeness authentication protocol communicates with said third communication apparatus not equipped with said completeness authentication protocol, it is determined by said completeness authentication arrangement means according to judgment information of said connection sequence means not to add said completeness authentication information and either one of a situation in which a communication is carried out with said the third apparatus by carrying out the ordinary protocol processing means processing the ordinary TCP or UDP and a situation in which a communication is not carried out with said the third apparatus without said completeness authentication arrangement is selected.

**22.** deleted).

**23.** maintained). A communication method according to either one of claims 20 to 22 further comprising a step in said completeness authentication arrangement step for storing a completeness authentication logic for adding completeness authentication information which can be a candidate to be arranged in a memory or for mounting it on a circuit; and completeness authentication logic changing step for changing said stored or mounted content periodically.

**24.** maintained). A communication method according to either one of claims 20 to 23, wherein arrangement such that the completeness authentication information is not to be added can be determined in said completeness authentication arrangement step by the completeness authentication logic for adding the completeness authentication information.

**25.** maintained). A communication method according to either one of claims 20 to 24 further comprising a step for authenticating a communication partner before said completeness authentication arrangement step.

**26.** amended). In a program realizing a communication system which carries out a communication by adding encrypting function to a TCP or UDP protocol positioned in a transport layer, a communication program comprising:
a function for connecting to a communication partner after judging whether or not the communication partner is a communication partner who possess right authority;
arrangement function for arranging encryption and decryption logic which have correspondence therewith for both ends of a communication path;
protocol encryption function for transmitting at least a payload of said protocol in a packet of an information unit to be transmitted and received according to an encryption logic arranged by said arrangement means; and
protocol decryption function for decrypting said encrypted protocol payload to be received according to a decryption logic arranged by said arrangement,
wherein when it is judged that said communication partner possesses right authority, a communication function applied with said encryption and decryption logic by using the TCP or UDP protocol is realized.

**27.** amended). In a computer program realizing a communication system which carries out a communication by adding encrypting function to a TCP or UDP protocol positioned in a transport layer, a communication program comprising:
a function for connecting to a communication partner after judging whether or not the communication partner is a communication partner who possess right authority;
completeness authentication arrangement function for arranging a completeness authentication logic which has correspondence therewith for-both ends of a communication path;
protocol completeness authentication information adding function for transmitting at least a payload of the protocol corresponding to said TCP or UDP in a packet as an information unit to be transmitted and received by adding completeness authentication information according to a completeness authentication logic arranged by said completeness authentication arrangement; and
protocol completeness authentication function for completeness-authenticating the received protocol added with said completeness authentication information according to a completeness authentication logic arranged by said completeness authentication arrangement,
wherein when it is judged that said communication partner possesses right authority, a communication function applied with said completeness authentication logic by using said TCP or UDP protocol is realized.
